# EUROPÄISCHE PATENTSCHRIFT

(11) **EP 3 564 636 B1**
(45) Veröffentlichungstag und Bekanntmachung des Hinweises auf die Patenterteilung: **03.03.2021**
(21) Anmeldenummer: 19000177.6
(22) Anmeldetag: 11.04.2019
(51) Int. Cl.: G01K 1/14, G01K 13/02, A47F 3/04

(54) **KÜHLMÖBEL**
REFRIGERATED FURNITURE
MEUBLE REFRIGERE

(30) Priorität: 11.04.2018 DE 102018002949
(43) Veröffentlichungstag der Anmeldung: 06.11.2019
(73) Patentinhaber: ChillServices GmbH, 30655 Hannover (DE)
(72) Erfinder: Ostermeyer, York, 30655 Hannover (DE); Månsson, Tommie Anders, 41457 Göteborg (SE)
(74) Vertreter: Hilger, Jens

(56) Entgegenhaltungen:
- WO-A1-01/18468
- WO-A1-2016/185658
- GB-A- 2 167 579
- US-A1- 2017 280 896
- Doer: "DS18B20 temperature sensor holder by Doer - Thingiverse", , 18. August 2015 (2015-08-18), XP055616077, Gefunden im Internet: URL:https://www.thingiverse.com/thing:9729 38 [gefunden am 2019-08-28]

## Beschreibung

Die vorliegende Erfindung betrifft ein Kühlmöbel, vorzugsweise ein Kühlregal, besonders vorzugsweise ein vertürtes Kühlregal, gemäß des Oberbegriffs des Patentanspruchs 1.

Der Verkauf von Lebensmitteln an den Endverbraucher findet üblicherweise durch Supermärkte, durch auf bestimmte Lebensmittel spezialisierte Geschäfte, durch die Supermarktabteilung von Kaufhäusern, durch Tankstellen, durch Kioske, durch Hofläden und dergleichen statt. Dies gilt auch für Lebensmittel, welche im gekühlten oder gefrorenen Zustand angeboten und verkauft werden. Dies können beispielsweise Molkereiprodukte, Gemüse, Fisch, Wurst, Fleisch, Salate, Teigwaren, Frischteigwaren sowie Convenience-Speisen wie z.B. Fertiggerichte sein.

Diese Waren werden üblicherweise im Lebensmitteleinzelhandel zur Selbstbedienung dem Kunden in Kühlregalen, Kühltruhen oder anderen Kühlmöbeln angeboten, wo sie im gekühlten bzw. gefrorenen Zustand aufbewahrt werden und von dem Kunden bei Bedarf selbst entnommen werden können. Je nach Warengruppe betragen die Solltemperaturen z.B. ca. -21°C für tiefgefrorene Waren und z.B. ca. 2°C oder ca. 6°C für gekühlte Waren. Je nach Temperatur der Kühlung können diese Kühlmöbel z.B. bei Solltemperaturen von z.B. ca. 2°C oder ca. 6°C für gekühlte Waren als Normalkühlmöbelund bei Solltemperaturen von z.B. ca. -21°C für tiefgefrorene Waren als Tiefkühlmöbel bezeichnet werden. Auch werden gekühlte Waren an Theken angeboten, wo sie von einem Fachverkäufer aus einem gekühlten Bereich der Theke, welcher üblicherweise dem Kunden zugewandt eine Glasabdeckung aufweist, entnommen, portioniert, verpackt und dem Kunden übergeben werden können. Letzteres ist beispielsweise für Fleisch und Fleischwaren, Käse und Fisch in größeren Supermärkten üblich. Kühlmöbel wie z.B. Kühlregale, Kühltruhen und dergleichen werden in Supermärkten jeglicher Größe verwendet.

Ein Kühlmöbel in Form eines Kühlregals ist üblicherweise wie ein Wandregal aufgebaut, so dass es sich von einem Untergrund wie z.B. von dem Boden des Verkaufsraums eines Supermarkts in der Höhe so weit erstreckt, wie der Inhalt von einem Kunden erreicht werden kann. Das Kühlregal weist üblicherweise einen Boden, eine Rückwand, eine Decke sowie jeweils links und rechts eine Seitenwand auf, wobei eine Seitenwand entfällt oder beide Seitenwände entfallen, falls sich das Kühlmöbel in einer Reihe mit einem weiteren Kühlmöbel bzw. mit weiteren Kühlmöbeln befindet. Innerhalb des Kühlregals wird ein Kühlraum gebildet, welcher sich üblicherweise in der Breite zwischen den beiden Seitenwänden des Kühlregals erstreckt, jedoch nach unten durch einen eigenen Boden, nach oben durch eine eigene Decke und nach hinten durch eine eigene Rückwand begrenzt wird. Der Kühlraum ist nach vorne zum Kunden bzw. zum Verkaufsraum hin zugänglich, wie weiter unten noch beschrieben werden wird. Innerhalb des Kühlraums sind üblicherweise in der Höhe mehrere horizontale Regalböden oder Regalflächen angeordnet, welche sich üblicherweise von der Rückwand des Kühlraums nach vorne zum Kunden bzw. zum Verkaufsraum hin erstrecken. Auf den Regalböden sowie ggfs. auf dem Boden des Kühlraums können die Waren angeordnet werden, welche gekühlt bzw. gefroren dem Kunden angeboten werden sollen und von diesem von vorne aus dem Kühlraum des Kühlregals entnommen werden können, indem der Kunde vom Verkaufsraum in den Kühlraum hinein langt.

Die Kühlung des Kühlraums kann dadurch bewirkt werden, dass sich ein Verdampfer im Kühlregal befindet. Dabei wird ein Kühlmittel innerhalb eines Kühlmittelkreislaufs flüssig über eine Rohrleitung geführt. Über wenigstens eine Entspannungsdüse wie z.B. eine Kapillare wird das Kühlmittel von dem flüssigen Zustand in den gasförmigen Zustand überführt, so dass das Kühlmittel beim Phasenwechsel Wärme aus der Umgebung aufnimmt, was zu einer Temperaturabsenkung, d.h. zu einer Abkühlung, der Luft führt. Durch die Führung der Rohrleitungen und durch die Kühlrippen eines Verdampfers, welche als Wärmetauscher dienen und üblicherweise zur Vergrößerung der wechselwirkenden Flächen als Plattenkonstruktionen ausgeführt sind, findet der Energiefluss von der vorbeiströmenden Luft statt, welche aus dem Kühlraum des Kühlregals stammt. Hierdurch kann kalte Zuluft erzeugt werden, welche zur Kühlung des Kühlraums diesem zugeführt wird. Derartige Kühlmöbel werden üblicherweise als direktgekühlt bezeichnet, da die kalte Zuluft innerhalb des Kühlmöbels bzw. von dem Kühlmöbel erzeugt wird.

Die weiteren Elemente des Kühlmittelkreislaufs wie z.B. ein Kompressor und ein Verflüssiger sind üblicherweise außerhalb des Kühlregals angeordnet, so dass mittels eines Kompressors und Verflüssigers ein Kühlmittelkreislauf betrieben werden kann, welcher mehrere Kühlregale und auch andere Kühlmöbel versorgen kann. Ein Kühlmöbel stellt eine Kühlstelle in dem Kühlmittelkreislauf dar, welcher je nach Anwendung wenigstens eine Kühlstelle und oftmals zehn und selten bis zu zwanzig Kühlstellen aufweisen kann.

Die Luft im Kühlmöbel wird üblicherweise über einen im Boden oder in der Rückwand verbauten Ventilator zirkuliert. Die Zirkulationsrichtung verläuft von dem unteren Bereich des Kühlraums durch einen Zwischenraum zwischen dem Boden des Kühlregals und dem Boden des Kühlraums in einen Zwischenraum zwischen der Rückwand des Kühlregals und der Rückwand des Kühlraums weiter in einen Zwischenraum zwischen der Decke des Kühlregals und der Decke des Kühlraums zurück in den oberen Bereich des Kühlraums. Dabei wird die Luft in einem dieser Zwischenräume von dem Ventilator gefördert sowie an den Kühlrippen des Verdampfers vorbeigeführt und hierdurch abgekühlt. Die Luftzuführung der Zuluft in den Kühlraum erfolgt üblicherweise oberhalb der Ware aus dem Zwischenraum zwischen der Decke des Kühlregals und der Decke des Kühlraums, indem die Luft z.B. über eine thermisch neutrale Wabenstruktur nach vorne umgelenkt wird und als laminare Strömung gerichtet von oben nach unten in den Kühlraum geleitet wird. Die Wabenstruktur kann u.a. eine geringe Masse aufweisen, um Kondensation zu verhindern. Durch Öffnungsschlitze im der Ware zugewandten Teil der Rückwand des Kühlraums kann die Zuluft zusätzlich kontinuierlich auch durch den Warenbestand strömen. Ein derartiges Kühlmöbel kann als zwangsventiliert bezeichnet werden.

Die Temperatur der Luft im Kühlregal wird üblicherweise dadurch auf einen gewünschten Temperatursollwert geregelt, indem zwei Messwerte jeweils von wenigstens einem Temperatursensor erfasst und ausgewertet werden. Dies sind zum einen die Temperatur der Luft vor dem Wärmetauscher, welche als Rücklufttemperatur bezeichnet werden kann, und die Temperatur der abgekühlten Luft nach dem Wärmetauscher, welche als Zulufttemperatur bezeichnet werden kann. Die Zulufttemperatur stellt gleichzeitig etwa die Temperatur dar, mit welcher die Luft in den Kühlraum eintritt, um die dort befindlichen Waren zu kühlen bzw. zu gefrieren. Dieser Luftstrom kann auch als Zuluft des Kühlraums bezeichnet werden. Die Rücklufttemperatur hingegeben stellt die Temperatur dar, mit welcher die Luft den Kühlraum verlässt. Dieser Luftstrom kann auch als Abluft oder als Rückluft bezeichnet werden. Die Rücklufttemperatur ist dabei größer als die Zulufttemperatur, da die Zuluft beim Durchströmen des Kühlraums Wärme aufnimmt. Aus dem erfassten Wert der Zulufttemperatur und dem zeitgleich erfassten Wert der Rücklufttemperatur wird über eine Wichtung der Ist-Wert der Kühlraumtemperatur ermittelt, welcher der Regelung zusammen mit dem jeweiligen Soll-Wert von z.B. -21°C für tiefgefrorene Waren und z.B. 2°C oder 6°C für gekühlte Waren zugrunde gelegt wird. Bei vertürten Kühlregalen wird üblicherweise eine Wichtung von 50% zu 50% verwendet, d.h. beide Temperaturwerte werden gleich gewichtet. Bei unvertürten Kühlregalen wird die Rücklufttemperatur mit 80% und die Zulufttemperatur mit 20% gewichtet.

Zur Einstellung der Temperaturregelung eines Kühlmöbels sind üblicherweise diverse Parametrisierungen zum jeweiligen Typ des Kühlmöbels und dessen Geometrie, dem verwendeten Kühlmittel, zur Warenbeladung, zur zuvor erwähnten Wichtung der Sensorsignale der Temperatursensoren etc. im Regelungssystem hinterlegt. Das Regelungssystem greift üblicherweise aktiv auf zwei Stellgrößen zu: die angefragte Solltemperatur des Kühlmittels und den Öffnungsgrad bzw. die Öffnungsdauer des Zustrommagnetventils des Kühlmittels. Im Kühlstellenverbund, d.h. alle Kühlstellen zusammen, die sich in einem Kühlmittelkreislauf befinden, legt das Kühlmöbel mit der Anfrage der niedrigsten Kühlmitteltemperatur die Vorgabe für den Verflüssiger und den Kühlmittelverdichter fest. Sofern andere Temperaturniveaus angefragt sind, kann dies über unterschiedliche Öffnungsgrade bzw. Öffnungsdauern der Zustrommagnetventile je Kühlmöbel ausgeglichen werden.

Diese Temperaturregelung des Kühlmöbels unterliegt zahlreichen Störgrößen. Hierzu gehören die Kunden, welche Waren aus dem Kühlraum entnehmen und hierdurch die Warenbeladung des Kühlraums variieren können. Auch kann die Anwesenheit z.B. einer Hand oder eines Armes des Kunden im Kühlraum zu einer Erwärmung des Kühlraums und bzw. oder zu einer Ablenkung des Luftstroms im Kühlraums führen. Dies kann ebenso für eine Warennachfüllung des Kühlraums durch einen Mitarbeiter gelten. Insbesondere können die nachgefüllten Waren eine höhere Temperatur aufweisen, so dass diese von dem Kühlmöbel heruntergekühlt werden müssen. Ferner können Fugen und andere Wärmebrücken in der Hülle des Kühlmöbels, d.h. im Boden, in der Rückwand, in der Decke sowie in den Seitenwänden des Kühlmöbels, die Temperaturregelung negativ beeinflussen, da hierdurch eine Konvektion der Wärme zwischen dem Kühlraum und dem Verkaufsraum stattfinden kann. Des Weiteren können gebildetes Kondensat sowie andere Materialien wie z.B. ausgelaufene Flüssigkeiten von Waren, Verpackungsreste und dergleichen z.B. auf dem Boden des Kühlregals, auf den Regalböden und auf anderen Oberflächen des Kühlraums zu einer Erhöhung der Luftfeuchtigkeit sowie zu einer Hinderung der Luftströmung führen, wodurch die Temperaturregelung zusätzlich erschwert werden kann.

Wurden derartige Kühlmöbel und insbesondere Kühlregale zunächst über viele Jahre zum Verkaufsraum bzw. zum Kunden hin offen betrieben, werden nunmehr viele Kühlmöbeltypen mit Türen hergestellt oder ältere Produkte im laufenden Betrieb mit Türen nachgerüstet, um die dem Verkaufsraum bzw. Kunden zugewandte Vorderseite eines Kühlregals durch Türen verschließbar auszubilden. Ein derartiges Kühlmöbel kann als vertürt bezeichnet werden. Mit anderen Worten wird der Kühlraum des Kühlmöbels vom Verkaufsraum des Supermarkts durch wenigstens eine Tür getrennt. Die Türen können üblicherweise mit einer Drehbewegung, welche durch eine wechselseitige Türaufhängung realisiert sein kann, und vereinzelt auch mit einer Schiebebewegung geöffnet bzw. geschlossen werden. Bei einer Kühltruhe kann die Oberseite des Kühlmöbels als schiebbare Decke bzw. als schiebbarer Deckel ausgebildet sein. Die Bewegung des Öffnens erfolgt jeweils üblicherweise händisch vom Kunden bzw. vom Mitarbeiter, wobei dies auch sensorbasiert motorisiert erfolgen kann. Das Schließen erfolgt zumindest bei Türen häufig über einen auf Schwerkraft beruhenden Gleitmechanismus, kann jedoch auch von dem Kunden bzw. Mitarbeiter ausgeführt werden müssen. Die Türen eines Kühlregals sind in der Regel ca. 60 cm breit und ca. 200 cm hoch.

Durch das Verschließen der dem Verkaufsraum bzw. dem Kunden zugewandten Vorderseite des Kühlregals soll die kalte Luft des Kühlraums möglichst in diesem gehalten und ein Vermischen mit temperierter, d.h. wärmerer Luft aus dem Verkaufsraum des Supermarkts vermieden werden, welche üblicherweise eine für den Kunden angenehme klimatisierte Raumlufttemperatur zwischen ca. 20°C und ca. 22°C aufweist. Zwar muss der Kunde sowie ein Mitarbeiter nun z.B. die Tür öffnen und halten, um an die Waren des Kühlmöbels zu gelangen bzw. um diese auffüllen sowie sortieren zu können. Jedoch kann der Energieverbrauch des Kühlmöbels reduziert werden, was die Betriebskosten des Supermarkts senken kann.

Um diesen Effekt möglichst wirkungsvoll zu nutzen, schließen die Türen bei Tiefkühlmöbeln vollständig ab, d.h. eine Türisolierung wird umlaufend flächig angedrückt. Zudem sind die Türen bei Tiefkühlmöbeln mit thermisch stark isolierendem Glas versehen. Beides soll einen Wärmeabfluss in den Verkaufsraum aufgrund des hohen Temperaturgefälles von ca. -21°C zu ca. 20°C bis ca. 22°C bei klimatisierter Raumlufttemperatur des Supermarkts verhindern. Auch soll dies eine Kondensation im Tiefkühlmöbel sowie an der Außenseite der Tür verhindern. Letzteres kann die Sicht auf die Waren im Kühlmöbel einschränken und dem Kunden das Auffinden der gewünschten Ware erschweren, so dass diese sogar gar nicht gefunden und gekauft werden kann. Auch kann die Leistung des Kühlmöbels durch eine stärkere Kondensat- und bzw. oder Eisbildung am Verdampfer, zumindest bei einem direktgekühlten System, negativ beeinflusst werden.

Bei Normalkühlungsmöbeln sind die Türen üblicherweise dünner ausgebildet, was ausreichend sein kann, um die zuvor beschriebenen Nachteile auch bei einem niedrigen Temperaturgefälle von ca. 2°C oder von ca. 6°C zu ca. 20°C bis ca. 22°C bei klimatisierter Raumlufttemperatur des Supermarkts zu verhindern. Auch schließen die Türen in diesem Fall das Kühlmöbelvolumen üblicherweise nicht vollständig ab, weil aufgrund des geringeren Temperaturgefälles der entsprechende technische Aufwand z.B. einer umlaufenden Dichtung nicht betrieben wird. Insbesondere gibt es üblicherweise Fugen im Bereich von ca. 0,5 cm bis ca. 2 cm auf der Stoßseite sowie bei den Türaufhängungen, durch welche Luft aus dem Verkaufsraum in den Kühlraum des Kühlmöbels gelangen sowie in der umgekehrten Richtung gekühlte Luft entweichen kann. Neben diesen Störgrößen der Temperaturregelung ist ferner zu beachten, dass es durch den Vorgang des Türöffnens und Türschließens, welcher regelmäßig von Kunden sowie von Mitarbeitern ausgeführt wird, zu Luftbewegungen zwischen dem Kühlraum und dem Verkaufsraum kommen kann. So kann durch das Öffnen einer Tür durch dessen Türöffnung kalte Luft aus dem Kühlraum in den Verkaufsraum gesogen und gleichzeitig warme Luft durch die Fugen benachbarter Türen aus dem Verkaufsraum in den Kühlraum eingesogen werden. Umgekehrt kann durch das Tüschliessen warme Luft aus dem Verkaufsraum durch die Türöffnung in den Kühlraum hineingedrückt und gleichzeitig kalte Luft durch die Fugen benachbarter Türen aus dem Kühlraum in den Verkaufsraum hinausgedrückt werden. Hierdurch kann kalte Luft aus dem Kühlraum für die Kühlung der Waren verloren gehen. Ferner muss die in den Kühlraum gelangte warme Luft aus dem Verkaufsraum, welche üblicherweise eine Temperatur von ca. 20°C bis ca. 22°C aufweist, durch das Kühlmöbel auf die eigene Solltemperatur von ca. 2°C oder von ca. 6°C heruntergekühlt werden.

Die GB 2 167 579 A beschreibt ein Regelsystem für eine Kühlvitrine, um die Vitrinentemperatur konstant oder in einem engen Bereich zu halten. Um dies zu erreichen, besteht das System aus zwei Temperaturfühlern, die an strategischen Positionen im Strömungsweg der Luft, die den Lagerraum kühlt, angeordnet sind. Und zwar befinden sich die Temperaturfühler auf beiden Seiten eines Verdampfers der Kühleinheit, über den die Luft strömt. Bei den Temperaturfühlern handelt es sich um temperaturempfindliche Widerstände. Die Widerstände sind in Reihe geschaltet, so dass sie zum Zwecke der Erzeugung eines Steuersignals summiert werden können, das auf dem Ausmaß beruht, in dem der Gesamtwiderstand der Fühler von einem mittleren Gesamtventil abweicht, das der erforderlichen Schranktemperatur entspricht, da dies ein erwünschtes Ansprechverhalten ergibt.

Das US 10,646,054 B2 beschreibt einen Schaukasten beinhaltet: ein Gehäuse mit einer vorderen Öffnung, durch die ein Produkt aufgenommen wird; einen Produktspeicher, der sich in dem Gehäuse befindet und ein Regal enthält, auf dem das Produkt ausgestellt wird; einen ersten Luftstromgenerator, der Luft für einen ersten Luftvorhang nach außen entlang des Produktspeichers strömen lässt; einen zweiten Luftstromgenerator, der Luft für einen zweiten Luftvorhang nach außen entlang des ersten Luftvorhangs strömen lässt; und eine Steuerung, die den ersten Luftstromgenerator in Betrieb setzt und den zweiten Luftstromgenerator veranlasst, die Leistung des zweiten Luftstromgenerators von einer Leistung zu einem ersten Zeitpunkt zu reduzieren, wenn ein zweiter Zeitpunkt erreicht wird, zu dem eine Unterbrechung des zweiten Luftvorhangs aufgrund einer Störung größer ist als eine Unterbrechung des zweiten Luftvorhangs zum ersten Zeitpunkt.

Die WO 01/18468 A1 beschreibt eine Vorrichtung zur Lagerung und Verteilung von Lebensmitteln. Die Lebensmittel werden in einem Schrank gelagert, der eine gekühlte Kammer aufweist, die mit Hilfe eines Verdampfers und eines Gebläses zur Luftzirkulation durch den Schrank und den Verdampfer auf einer konstanten Temperatur gehalten wird. Die Leistung des Gebläses ist so bemessen, dass die Luft in der gekühlten Kammer mindestens dreimal, vorzugsweise sechsmal, pro Minute umgewälzt wird. Die DE 10 2011 000 545 A1 offenbart auch ein Kühlmöbel mit Sensor zur Messung der Temperatur der Rückluft.

Eine Aufgabe der vorliegenden Erfindung ist es, ein Kühlmöbel der eingangs beschriebenen Art bereitzustellen, dessen Energieverbrauch reduziert werden kann. Zumindest soll eine Alternative zu bekannten derartigen Kühlmöbeln geschaffen werden.

Die Aufgabe wird erfindungsgemäß durch ein Kühlmöbel mit den Merkmalen des Patentanspruchs 1. Vorteilhafte Weiterbildungen sind in den Unteransprüchen beschrieben.

Somit betrifft die vorliegende Erfindung ein Kühlmöbel, vorzugsweise ein Kühlregal, besonders vorzugsweise ein vertürtes Kühlregal, mit einem Kühlraum zur Aufnahme zu kühlender und bzw. oder zu gefrierender Waren, vorzugsweise Lebensmittel, und mit wenigstens einem Temperatursensor, welcher in dem Kühlmöbel derart angeordnet ist, dass eine Lufttemperatur einer Rückluft des Kühlraums erfasst werden kann. Ein derartiges Kühlmöbel wurde eingangs am Beispiel eines Kühlregals beschrieben, weshalb dies hier nicht wiederholt werden soll. Dabei kann das Kühlmöbel sowohl vertürt als auch unvertürt sein. Das Kühlmöbel kann ein Kühlregal, eine Kühltruhe (auch Inseln oder Gondeln genannt), eine Verkaufstheke z.B. für Käse, Fleisch, Fisch und dergleichen sowie ein sonstiges Kühlmöbel sein, auf welches sich die vorliegende Erfindung anwenden lässt. Neben den eingangs beschriebenen direktgekühlten Kühlmöbeln kann die vorliegende Erfindung auch auf indirekt gekühlte Kühlmöbel angewendet werden. Hierunter werden Kühlmöbel verstanden, dessen Medium wie z.B. Luft oder ein Wassergemisch außerhalb des Kühlmöbels temperiert und dann in den Wärmetauscher im Möbel geleitet wird. Auch diese Kreisläufe werden über eine Sensorik gesteuert, welche eine Lufttemperatur einer Rückluft des Kühlraums erfasst.

Das erfindungsgemäße Kühlmöbel ist dadurch gekennzeichnet, dass der Temperatursensor in einem Bereich des Kühlmöbels, vorzugsweise eines Bodens des Kühlmöbels, angeordnet ist, in welchem eine mittlere Temperatur der Rückluft erfasst werden kann. Die Rückluft soll insbesondere keine vereinzelten Luftströmungseffekte aufweisen sowie sollen die Erfassung der Temperatur der Rückluft in Luftstaubereichen vermieden werden, welche zwar ebenfalls deutlich turbulent sein können, aber evtl. Hitzestau zeigen können. Mit anderen Worten soll eine Temperatur der Rückluft erfasst werden, welche zwischen dessen Extremwerten liegt und somit als charakterisierend für alle Temperaturen angesehen werden kann, welche im Luftstrom der Rückluft vorliegen. Dies kann insbesondere dadurch erreicht werden, dass eine mittlere Temperatur der Rückluft erfasst wird, welche einen Mittelwert aller Temperaturen des Luftstroms der Rückluft darstellt. Dieser Mittelwert kann insbesondere in der Mitte zwischen einer maximalen und einer minimalen Temperatur der Rückluft liegen.

Der vorliegenden Erfindung liegt dabei die Erkenntnis zugrunde, dass bei bekannten derartigen Kühlmöbeln die Position des Temperatursensors zur Erfassung der Lufttemperatur der Rückluft derzeit nur grob in der Kühlmöbelherstellung vorgegeben wird, falls ein derartiger Temperatursensor ab Werk vorhanden ist. Hierdurch kommt es zu signifikanten Schwankungen in der Positionierung des Temperatursensors. Wird ein Temperatursensor erst am Aufstellungsort im Supermarkt montiert, so unterliegt diese Positionierung sogar noch größeren Schwankungen, da die nachträgliche Montage derartiger Temperatursensoren oftmals durch Handwerker bei der Inbetriebnahme der Kühlmöbels im Supermarkt, insbesondere im Altbestand, durchgeführt wird. Dies führt dazu, dass der Temperatursensor vergleichsweise undefiniert dort angeordnet wird, wo dies dem Arbeiter in der Montage bzw. dem Handwerker vor Ort aufgrund von Montageabläufen, konstruktiven Gegebenheiten oder erfahrungsbasierten Kenntnissen passend erscheint. Hierdurch kann es von Kühlmöbel zu Kühlmöbel, auch bei Produkten desselben Herstellers und sogar derselben Produktreihe, zu deutlichen Abweichungen in der Positionierung des Temperatursensors kommen. Sofern bei gleichen Kühlmöbeltypen die gleichen Konstruktionselemente verwendet werden, kann die Position des Temperatursensors über mehrere Kühlmöbel ähnlich sein, was aber nicht der Fall sein muss.

Ob bei der Montage des Temperatursensors in der Fertigung oder am Aufstellungsort, der Rückluft-Temperatursensor wird üblicherweise durch einfache Kabelschellen am Kühlmöbelboden oder an Konstruktionsbauteilen befestigt. Dabei wird üblicherweise der Temperatursensor dort montiert, wo es für die Person gerade einfach, schnell und bequem möglich ist. Dies führt insbesondere bei der Montage am Aufstellungsort dazu, dass der Temperatursensor üblicherweise im Bereich einer unteren Vorderkante des Kühlmöbels angeordnet wird, da dieser Bereich von oben freiliegend und gut mit zwei Händen im Knien zugänglich ist. Auch kann der Temperatursensor durch die Montage an Konstruktionsbauteilen des Kühlmöbels im Luftstrom hinter einem Bauteil und damit für den Luftstrom verdeckt angeordnet werden.

Der Bereich der unteren Vorderkante des Kühlmöbels weist jedoch mehrere Nachteile auf. So wird im Bereich der unteren Vorderkante des Kühlmöbels üblicherweise die Rückluft um ca. 90° in die Tiefe nach hinten und parallel zum Boden des Kühlmöbels umgelenkt. Dabei werden die äußeren Luftschichten der vertikal nach unten strömenden Rückluft an der Innenseite der unteren Vorderkante des Kühlmöbels vorbeigeführt, welche aufgrund des vorangehenden Kontakts mit dem Verkaufsraum (im Fall eines unvertürten Kühlmöbels) oder mit der Glasscheibe einer Tür (im Fall eines vertürten Kühlmöbels) wärmer sind als die Luft im Inneren des Kühlraums bzw. als die mittlere Temperatur der Rückluft, welche mit den Waren in Kontakt steht. Ferner können die äußeren Luftschichten eher mit warmer Luft vermischt sein, welche durch Fugen sowie durch das Öffen von Türen in den Kühlraum gelangt ist, sofern das Kühlmöbel vertürt ist. Somit erfasst der Temperatursensor an dieser Stelle eher eine höhere Temperatur der Rückluft als diese tatsächlich aufweist, da die dem Inneren des Kühlraums zugewandten Schichten der Rückluft kälter sind als die äußeren dem Temperatursensor zugewandten Schichten.

Ferner kann die untere Vorderkante des Kühlmöbels selbst eine höhere Temperatur als die Luft im Inneren des Kühlraums aufweisen, da die untere Vorderkante des Kühlmöbels wärmeleitend mit dem Verkaufsraum in Kontakt steht. Diese höhere Temperatur kann sich z.B. durch Wärmestrahlung und bzw. oder durch Konvektion auf das Messergebnis des Temperatursensors auswirken, so dass der Temperatursensor an dieser Stelle aus diesem Grund eher eine höhere Temperatur der Rückluft erfassen kann als diese tatsächlich aufweist.

Bei der Anordnung des Temperatursensors ist ferner zu beachten, dass die bekannten Sensoren z.B. bei kleineren Reinigungsarbeiten des Kühlmöbels wie z.B. dem Auswischen des Bodenbereichs des Kühlraums sowie bei vollständigen Groß-Reinigungsarbeiten, bei denen z.B. das Kühlmöbel geräumt und der Kühlraum mit einem Wasserstrahl gereinigt wird, aus ihrer Befestigungsposition herausgelöst und unbeabsichtigt umpositioniert werden können. Dies kann die erfasste Temperatur nach der Reinigung gegenüber der vor der Reinigung erfassten Temperatur verändern. Auch besteht die Gefahr, dass der Temperatursensor in Kontakt mit einem Kondensat, mit anderen Bestandteilen wie z.B. Resten aus beschädigten Produktverpackungen, mit ausgelaufenen Flüssigkeiten wie z.B. Milch, Joghurt und dergleichen oder mit dem Metall des Bodens selbst gerät, so dass der Temperatursensor nicht mehr die Lufttemperatur der Rückluft erfasst sondern im schlechtesten Fall eine punktuelle Temperatur einer Feuchtekugel, d.h. eine adiabatische Kühlung durch Verdampfung der Kontaktflüssigkeit. Dies kann jeweils und insbesondere in Kombination zu einer deutlichen Verfälschung der erfassten Temperatur der Rückluft gegenüber der tatsächlichen im Inneren des Kühlraums vorliegenden Lufttemperatur führen.

Da die Temperaturregelung bzw. der Betrieb des Kältekreislaufs für das Kühlmöbel auch auf dem gewichteten sensorisch erfassten Temperaturwert der Rückluft basiert, wirkt sich eine zu warme erfasste Temperatur dahingehend auf die Erzeugung der kalten Zuluft aus, dass diese kälter als tatsächlich erforderlich bereitgestellt wird. Schließlich geht die Regelung aufgrund der zu hohen erfassten Temperatur davon aus, dass einer höheren Temperatur entgegengewirkt werden muss als tatsächlich im Inneren des Kühlraums vorliegt. Dies führt zu einer höheren Aktivität des Zustrommagnetventils des Kühlmittels, da der Öffnungsgrad bzw. die Öffnungsdauer von der Regelung erhöht werden, um mehr kalte Zuluft zu erzeugen. Auch bedeutet dies einen höheren Energieverbrauch als eigentlich erforderlich. Auch wird das Zustrommagnetventil hierdurch häufiger und länger und damit stärker als erforderlich beansprucht.

Vor diesem Hintergrund wurden umfangreiche empirische Untersuchungen an Kühlmöbeln und insbesondere an Kühlregalen in zahlreichen Supermärkten über längere Zeiträume durchgeführt sowie Modellierung der numerischen Strömungsmechanik (Englisch: Computational Fluid Dynamics, CFD) erstellt. Hierdurch konnten die zuvor beschriebenen Effekte bestätigt und quantifiziert werden, dass im Querschnitt des Luftstroms der Rückluft zwischen dem Boden des Kühlmöbels wie z.B. einer unteren Vorderkante des Kühlmöbels und dem Inneren des Kühlraums signifikant unterschiedlich temperierte Luftschichten vorliegen und bei der herkömmlichen Anordnung des Temperatursensors unmittelbar auf der Innenseite der unteren Vorderkante des Kühlmöbels zu hohe Temperaturen der Rückluft erfasst werden.

Mittels der Simulationen der numerischen Strömungsmechanik konnten für die betrachteten Kühlmöbel verbesserte Positionierungen des jeweiligen Temperatursensors gefunden werden, welche sich jeweils dadurch auszeichnen, dass diese Positionen die erfasste Temperatur der Rückluft einer repräsentativen und insbesondere einer mittleren Temperatur des Kühlraums entspricht, im Gegensatz zu den bisher bekannten wahllos vorgenommenen Positionierungen der Temperatursensoren. Mit anderen Worten kann der Temperatursensor bzw. dessen Messspitze in einem Bereich bzw. in einer Luftschicht positoniert werden, welcher bzw. welche repräsentativ für die Temperatur der Rückluft ist. Dies kann insbesondere in einem Bereich bzw. in einer Luftschicht erreicht werden, welcher bzw. welche eine mittlere Temperatur der Rückluft aufweist. Hierdurch kann eine Temperatur der Rückluft erfasst werden, welche weder zu warm noch zu kalt ist; Letzeres würde die Regelung zu einer zu geringen Kühlung des Kühlraums veranlassen, was schädigend für die zu kühlenden bzw. zu gefrierenden Waren sowie normwidrig sein kann.

Insbesondere wurde der Temperatursensor bzw. dessen Messspitze aus dem Randbereich der Strömung der Rückluft heraus verlagert. Auch kann der Temperatursensor bzw. dessen Messspitze aus Bereichen herausverlagert werden, welche starken Temperaturschwankungen z.B. durch vereinzelte Luftströmungseffekte, welche fälschlicherweise der Regelung zugrunde gelegt werden könnten, unterliegen. Derartige Luftströmungseffekte können z.B. bei vertürten Kühlmöbel durch die Fugen der Türen sowie durch das Öffnen und Schließen der Türen auftreten. Insbesondere ist ein Bereich zur Erfassung der Temperatur der Rückluft zu bevorzugen, in welchem eine verwirbelte Rückluft vorliegt, die eine repräsentative Temperatur und insbesondere eine mittlere Temperatur aufweist sowie möglichst stabil in Relation zu vereinzelten Luftströmungseffekten ist.

Hierdurch kann nunmehr eine Temperatur der Rückluft erfasst werden, welche für die tatsächlich im Inneren des Kühlraums vorhandene Temperatur repräsentativer als die bisher erfassten Temperaturen ist. Auch das Erfassen von Extremwerten wie maximalen und minimalen Temperaturen kann vermieden bzw. zumindest reduziert werden. Insbesondere kann hierdurch eine mittlere Temperatur der Rückluft erfasst werden. Dies kann die Regelung verbessern, den Energieverbrauch der Kühlung reduzieren sowie das Zustrommagnetventil des Kühlmittels entlasten.

Die Temperaturabweichungen zwischen der bisher sensorisch erfassten zu warmen Temperatur und der tatsächlichen Temperatur des Inneren des Kühlraums ist dabei eher gering und liegt im Bereich von ca. 1°C bis ca. 2°C. Dennoch konnte empirisch eine Energieersparnis von ca. 3% auf 10.000 kWh für ein 3,75 m breites Kühlregal nachgewiesen werden. Dies kann über die Jahre zu einer merklichen Reduzierung der Energiekosten für den Betrieb des Kühlregals an sich führen. Ferner kann eine Reduzierung der mit dem Energiebedarf verbundenen CO2-Emissionen erreicht werden. Wird der Supermarkt als Ganzes betrachtet, kann auch dessen Energiebedarf zusätzlich dadurch reduziert werden, dass durch die Verwendung eines erfindungsgemäßen Kühlmöbels auch die Kälte reduziert werden kann, welche aus dem Kühlmöbel in den Verkaufsraum entweichen kann und gegen die mittels der Klimaanlage des Supermarkts angeheizt werden muss. Betrachtet man ferner den Verdichter des Kältemittelkreislaufs des Kühlmöbels, so kann dieser stabiler betrieben werden, da die mittlere Last reduziert werden kann. Die geringere Anzahl von Lastwechseln sowie der seltener erforderliche Betrieb bei Maximalleistung kann den Verdichter schonen und seine Lebensdauer erhöhen. Insgesamt kann der Betrieb des Kühlmöbels bzw. des Kältemittelkreislaufs durch die erfindungsgemäße Annährung der sensorisch erfassten Temperatur an die tatsächliche Temperatur im Inneren des Kühlraums stabilisiert werden, da die Regelung in einem engeren Temperaturband arbeiten kann.

Vorteilhaft kann auch sein, dass es bei dem erfindungsgemäßen Kühlmöbel zu einer Reduzierung von Störmeldungen kommen kann. Dies ist dadurch begründet, dass derartige Kühlmöbel üblicherweise ein Warnsystem aufweisen, welches u.a. auf der sensorisch erfassten Temperatur der Rückluft basiert. Wird ein vorbestimmter Wert der Rücklufttemperatur erreicht oder überschritten, so wird eine Warnmeldung ausgelöst, welche auf eine Gefährdung der Waren bzw. der Warentemperatur hinweist, so dass ein Mitarbeiter des Supermarkts das Kühlmöbel und die Waren überprüfen kann. Aus den zuvor beschriebenen Gründen wird dieser Hinweis häufig unbegründet sein, da vom Temperatursensor eine zu hohe Temperatur erfasst wird als repräsentativ für die Temperatur der Rückluft wäre. Somit kann durch die vorliegende Erfindung auch die Anzahl von unbegründeten Warnmeldungen reduziert werden, was das Vertrauen der Mitarbeiter des Supermarkts in das Warnsystem erhöhen und die Mitarbeiter vom Aufwand einer unbegründeten Kontrolle des Kühlmöbels und der Waren entlasten kann. Auch kann die Anzahl der ggfs. kostenverursachenden Einsätze von Servicetechnikern reduziert werden, welche durch das Warnsystem und die regeltechnische Anlage mitunter direkt informiert werden.

Gemäß eines Aspekts der vorliegenden Erfindung ist der Temperatursensor gegenüber einem Boden des Kühlmöbels derart in der Höhe beabstandet angeordnet, dass eine repräsentative, vorzugsweise mittlere, Temperatur der Rückluft erfasst werden kann. Hierdurch kann der Temperatursensor bzw. dessen Messspitze zum einen in entsprechende Luftschichten gebracht werden, welche eher vom Rand des Luftstroms beabstandet und eher mittig im Luftstrom vorliegen können. Zum anderen kann der Temperatursensor bzw. dessen Messspitze von einem Untergrund wie z.B. von einer unteren Vorderkante des Kühlmöbels und bzw. oder von einem Boden des Kühlmöbels beabstandet werden, um einen wärmeleitenden Kontakt sicher zu vermeiden sowie um den Auswirkungen der Wärme wie z.B. Wärmestrahlung und Konvektion, welche vom Untergrund ausgehen können, zu entweichen. Hierdurch kann die erfasste Temperatur eher der tatsächlich im Inneren des Kühlraums vorliegenden Temperatur entsprechen. Auch kann der Temperatursensor bzw. dessen Messspitze durch seine Beabstandung zum Untergrund vor Verschmutzungen wie insbesondere vor ausgelaufenen Flüssigkeiten und dergleichen geschützt werden, welche sich üblicherweise am tiefsten Punkt des Kühlmöbels und damit auf dem Boden des Kühlmöbels ansammeln können.

Gemäß eines weiteren Aspekts der vorliegenden Erfindung ist der Temperatursensor gegenüber einer unteren Vorderkante des Kühlmöbels derart in der Tiefe beabstandet angeordnet, dass eine repräsentative, vorzugsweise mittlere, Temperatur der Rückluft erfasst werden kann. Auf diese Art und Weise können die Einflüsse der unteren Vorderkante des Kühlmöbels auf die Temperaturerfassung des Sensors reduziert oder sogar vollkommen vermieden werden. Dabei kann die untere Vorderkante des Kühlmöbels als Störelement der sensorischen Temperaturerfassung besonders relevant sein, da die untere Vorderkante des Kühlmöbels dem Verkaufsraum des Supermarkts zugewandt ist und in Abhängigkeit ihrer thermischen Isolation von dort Wärme in das Innere des Kühlmöbels leiten kann.

Gemäß eines weiteren Aspekts der vorliegenden Erfindung weist das Kühlmöbel einen Boden auf und der Kühlraum einen Boden auf, welcher oberhalb des Bodens des Kühlmöbels angeordnet ist, wobei zwischen dem Boden des Kühlmöbels und dem Boden des Kühlraums ein Zwischenraum gebildet wird, wobei der Temperatursensor innerhalb des Zwischenraums zwischen dem Boden des Kühlmöbels und dem Boden des Kühlraums angeordnet ist. Auf diese Art und Weise kann der Temperatursensor in einem Bereich des Kühlmöbels angeordnet werden, wo aufgrund der definierten Führung der Luftströmung bekannte, konstante und reproduzierbare Verhältnisse der Luftströmung der Rückluft vorliegen können. Entsprechend schwankungsarm kann die Temperaturerfassung hier erfolgen. Auch kann stets dieselbe Luftschicht der Rückluft erfasst werden.

Gemäß eines weiteren Aspekts der vorliegenden Erfindung ist der Temperatursensor innerhalb des Zwischenraums zwischen dem Boden des Kühlmöbels und dem Boden des Kühlraums in der Höhe innerhalb der oberen Hälfte, vorzugsweise auf etwa drei Viertel der Höhe des Zwischenraums, angeordnet. Diesem Aspekt der vorliegenden Erfindung liegt die Erkenntnis zugrunde, dass die Rückluft üblicherweise beim Eintritt von oben in den Zwischenraum zwischen dem Boden des Kühlmöbels und dem Boden des Kühlraums an der unteren Vorderkante des Kühlmöbels um ca. 90° umgelenkt wird. Hierdurch werden beim Umlenken unterschiedliche Luftschichten gebildet, welche unterschiedliche Temperaturen aufweisen könnte. Dabei können die radial äußeren Luftschichten des Stroms der Rückluft aufgrund ihrer Nähe zur unteren Vorderkante des Kühlmöbels wärmer als die radial mittleren und inneren Schichten sein. Auch können die radial äußeren Luftschichten der Rückluft größere Anteile von warmer Luft aufweisen, welche aus dem Verkaufsraum stammt. Die radial mittleren bis inneren Luftschichten der Rückluft können somit eher repräsentativ für die Temperatur der Rückluft sein. Auch werden die radial mittleren bis inneren Luftschichten beim Umlenken weniger stark bewegt, so dass diese zwar durchmischt jedoch hier gleichzeitig eher laminare Strömungsverhältnisse vorliegen, welche somit eher bekannt, konstant und reproduzierbar sein können. Wird eine ungefähre Trennung dieser beiden Verhältnisse etwa in der Mitte der Höhe des Zwischenraums gezogen, so kann der Temperatursensor eine konstantere und eher für die Lufttemperatur im Inneren des Kühlraums repräsentative Temperatur dann erfassen, wenn er in der Höhe in der oberen Hälfte des Zwischenraums zwischen dem Boden des Kühlmöbels und dem Boden des Kühlraums angeordnet ist. Dabei kann unter der oberen Hälfte des Zwischenraums der Bereich des Zwischenraums in der Höhe verstanden werden, welcher überwiegend dem Boden des Kühlraums zugewandt ist.

Dies kann insbesondere dann gelten, wenn der Temperatursensor in der Höhe auf etwa drei Viertel der Höhe des Zwischenraums zwischen dem Boden des Kühlmöbels und dem Boden des Kühlraums angeordnet ist, da in diesem Bereich zum einen das zuvor genannte weiterhin Gültigkeit haben kann und zum anderen eine bremsende Wirkung der Unterseite des Bodens des Kühlraums auf die Luftströmung vermieden werden kann.

Gemäß eines weiteren Aspekts der vorliegenden Erfindung ist der Temperatursensor innerhalb des Zwischenraums zwischen dem Boden des Kühlmöbels und dem Boden des Kühlraums in der Tiefe zu einer Kante des Bodens des Kühlraums derart beabstandet angeordnet, dass eine repräsentative, vorzugsweise mittlere, Temperatur der Rückluft erfasst werden kann. Wie zuvor beschrieben kommt es beim Eintritt des Luftstroms der Rückluft in den Zwischenraum zwischen dem Boden des Kühlmöbels und dem Boden des Kühlraums aufgrund einer Umlenkung des Luftstroms zu Luftbewegungen und ggfs. zu Turbulenzen. Auch wenn diese, wie zuvor beschrieben, eher dem Boden des Kühlmöbels zugewandt auftreten, so kann der Bereich der Umlenkung sowie des Eintritts in den Zwischenraum zwischen dem Boden des Kühlmöbels und dem Boden des Kühlraums als vergleichsweise unruhig in Relation zu dem dahinterliegenden Bereich dieses Zwischenraums angesehen werden. Daher kann es vorteilhaft sein, den Temperatursensor von der Kante des Bodens des Kühlraums derart zu beabstanden, dass der Temperatursensor dort angeordnet ist, wo sich eine gleichmäßige und eher laminare Luftströmung ausgebildet hat, so dass die Temperatur der Rückluft definiert und reproduzierbar erfasst werden kann.

Gemäß eines weiteren Aspekts der vorliegenden Erfindung ist innerhalb des Zwischenraums zwischen dem Boden des Kühlmöbels und dem Boden des Kühlraums eine Kühlungseinheit angeordnet, wobei der Temperatursensor in der Tiefe zwischen einer Kante des Bodens des Kühlraums und der Kühlungseinheit in der mittleren Hälfte, vorzugsweise im mittleren Viertel, besonders vorzugsweise etwa mittig, angeordnet ist. Die Kühlungseinheit ist dazu ausgebildet, die Rückluft zu erhalten und abzukühlen. Vorzugsweise kann als Kühlungseinheit ein Verdampfer verwendet werden, um dies zu erreichen. Insbesondere kann der Verdampfer in Kombination mit einem Ventilator verwendet werden, um die Rückluft anzusaugen, abzukühlen und als Zuluft wieder abzugeben. Dieser Aspekt der vorliegenden Erfindung greift die zuvor beschriebenen Gedanken auf und konkretisiert die Positionierung des Temperatursensors näher, so dass die zuvor beschriebenen Eigenschaften der Temperaturerfassung vorzugsweise durch diese Positionierung erreicht werden können.

Gemäß eines weiteren Aspekts der vorliegenden Erfindung weist das Kühlmöbel wenigstens eine Tür auf und der Temperatursensor ist in der Breite in der mittleren Hälfte der Tür, vorzugsweise im mittleren Viertel der Tür, besonders vorzugsweise etwa mittig zur Tür, angeordnet. Wird die vorliegende Erfindung somit auf ein vertürtes Kühlmöbel angewendet, kann die Tür bzw. die korrespondierende Türöffnung als Orientierungshilfe verwendet werden, um eine möglichst aussagekräftige Temperaturerfassung zu realisieren. Wird somit der Temperatursensor in der mittleren Hälfte der Tür angeordnet, so kann der Temperatursensor von seitlichen Elementen wie z.B. den Seitenwänden des Kühlmöbels ausreichend beabstandet werden, um in einem Bereich des Luftstroms der Rückluft positioniert zu werden, so dass eine Temperatur der Rückluft erfasst werden kann, welche repräsentativ für die tatsächliche Lufttemperatur im Innenraum des Kühlraums ist. Dies kann insbesondere dadurch erreicht werden, indem der Temperatursensor in dem mittleren Viertel der Tür bzw. der Türöffnung und insbesondere mittig zur Tür bzw. zur Türöffnung positioniert wird.

Die vorliegende Offenbarung betrifft auch einen Sensorhalter zur Verwendung bei einem Kühlmöbel wie zuvor beschrieben mit einer Auflagefläche, welche ausgebildet ist, auf einem Boden des Kühlmöbels angeordnet zu werden, mit wenigstens einer ersten Sensoraufnahme, welche ausgebildet ist, einen Temperatursensor zu halten, und mit wenigstens einem ersten Abstandselement, welches ausgebildet ist, die erste Sensoraufnahme gegenüber der Auflagefläche in der Höhe in einer ersten Höhe anzuordnen. Mittels eines derartigen Temperatursensors kann die Realisierung eines erfindungsgemäßen Kühlmöbels wie zuvor beschrieben vereinfacht bzw. ermöglicht werden. Mittels des Sensorhalters kann der Temperatursensor gehalten werden, so dass der Sensorhalter mit Temperatursensor zusammen von einer Person wie z.B. einem Arbeiter in der Montage oder einem Handwerker bei der Installation im Supermarkt gehalten, bewegt und platziert werden kann. Dies kann zum einen die Handhabung des Temperatursensors allgemein erleichtern. Zum anderen kann dies die Positionierung erleichtern, da die Höhe, in der der Temperatursensor bzw. dessen Messspitze über dem Boden des Kühlmöbels positioniert werden soll, durch die Ausgestaltung des ersten Abstandselements vorgegeben werden kann. Hierdurch kann die Person von dieser Aufgabe entlastet und die gewünschte Höhe des Temperatursensors bzw. der Messspitze definiert und reproduzierbar festgelegt werden. Auch kann der Temperatursensor bzw. dessen Messspitze durch seine Beabstandung zum Untergrund vor dort befindlichen Verschmutzungen geschützt werden, wie bereits zuvor beschrieben.

Als Material des Sensorhalters kann vorzugsweise ein Polyamid-Werkstoff mit 30% Glasfaseranteil (PA6 GF 30) verwendet werden, welches ein schwarzer Kunststoff ist. Dieses Material ist ferner thermisch isolierend und weist keine elektrostatische Aufladung auf. Aufgrund des Glasfaseranteils kann der Sensorhalter zumindest in einem begrenzten Maß belastbar gegen mechanische Einflüsse wie z.B. einen Kontakt während der Reinigungsarbeiten sein, was die Langlebigkeit des Sensorhalters fördern kann.

Erfindungsgemäß weist der Sensorhalter wenigstens eine zweite Sensoraufnahme auf, welche ausgebildet ist, den Temperatursensor alternativ zur ersten Sensoraufnahme zu halten, und der Sensorhalter weist wenigstens ein zweites Abstandselement auf, welches ausgebildet ist, die zweite Sensoraufnahme gegenüber der Auflagefläche in der Höhe in einer zweiten Höhe anzuordnen. Hierdurch können zwei verschiedene Höhen durch ein und denselben Sensorhalter vorgegeben werden, so dass derselbe Sensorhalter für zwei verschiedene Einbausituationen bzw. Einbauhöhen des Temperatursensors verwendet werden kann. Dies kann die Produktion, die Lagerhaltung, den Versand und dergleichen vereinfachen, da lediglich ein Sensorhalter vorhanden ist. Auch kann dies die Anwendung des Sensorhalters sowohl in der Montage als auch im Supermarkt vor Ort erleichtern, da zur Umsetzung beider Einbausituationen stets der richtige Sensorhalter vorhanden ist.

Die Notwendigkeit zweier unterschiedlich hoher Positionen des Temperatursensors kann sich daraus ergeben, dass die vorliegende Erfindung auf Kühlmöbel unterschiedlicher Hersteller sowie unterschiedliche Produkte derselben Hersteller angewendet werden kann. Dabei können unterschiedliche Kühlmöbel im Bereich des Bodens und insbesondere in einem Zwischenraum zwischen dem Boden des Kühlmöbels und dem Boden des Kühlraums unterschiedliche Höhen aufweisen, in denen der Temperatursensor angeordnet werden kann. Dies kann es erfordern, ggfs. den Temperatursensor in derjenigen Sensoraufnahme anzuordnen, welche eine geringere Höhe von z.B. 6 cm aufweist, wenn die Anordnung des Temperatursensors bzw. dessen Messspitze in der anderen Sensoraufnahme mit der größeren Höhe von z.B. 8 cm nicht erfindungsgemäß möglich ist, weil der Temperatursensor bei einer Positionierung in der größeren Höhe mit z.B. einem Boden des Kühlraums kollidieren würde.

Gemäß eines weiteren Aspekts der vorliegenden Erfindung weist die erste Sensoraufnahme und bzw. oder die zweite Sensoraufnahme wenigstens eine Rastmarke, vorzugsweise eine Mehrzahl von Rastmarken, auf, welche ausgebildet ist, in wenigstens eine korrespondierende Einschnürung des Temperatursensors, vorzugsweise einer Messspitze des Temperatursensors, einzugreifen. Hierdurch kann der Temperatursensor zum einen definiert positioniert werden. Zum anderen kann gleichzeitig ein Halt des Temperatursensors in der Sensoraufnahme zumindest in derjenigen Raumrichtung erfolgen, welcher die Rastmarke haltend entgegenwirken kann. Als Rastmarke kann vorzugsweise eine Kante innerhalb der Sensoraufnahme verwendet werden, welche den Temperatursensor bzw. dessen Messspitze durch Eingriff in eine korrespondierende Einschnürung definiert halten kann. Dies kann durch die Verwendung von mehreren Kanten und mehreren korrespondierenden Einschnürungen noch wirkungsvoller umgesetzt werden.

Gemäß eines weiteren Aspekts der vorliegenden Erfindung weist der Sensorhalter wenigstens einen Kabelführungskanal auf, welcher ausgebildet ist, ein korrespondierendes Kabel des Temperatursensors aufzunehmen, wobei der Kabelführungskanal vorzugsweise derart eng ausgebildet ist, so dass das Kabel des Temperatursensors kraftschlüssig gehalten werden kann, und bzw. oder der Kabelführungskanal ist vorzugsweise sich derart randseitig verjüngend ausgebildet, so dass das Kabel des Temperatursensors kraftschlüssig und bzw. oder formschlüssig gehalten werden kann. Hierdurch kann ein Kabel des Temperatursensors geführt werden, was die Positionierung sowie die Handhabung des Temperatursensors als Ganzes verbessern kann. Das Kabel des Temperatursensors dabei aufgrund einer geringeren Dimensionierung des Kabelführungskanals gegenüber dem äußeren Maß des Kabels kraftschlüssig zu halten kann eine einfach umzusetzende Möglichkeit sein, um einen gewissen Halt des Kabels im Kabelführungskanal zu erreichen. Zusätzlich oder alternativ einen sich verjüngenden Rand des Kabelführungskanals auszubilden, so dass das Kabel mit Druck gegen ein Auffedern des Kabelführungskanals formschlüssig und ggfs. zusätzlich kraftschlüssig in diesem gehalten werden kann, kann diese Funktion wirkungsvoller und dennoch einfach umsetzbar machen, sofern das Material des Sensorhalters dies ermöglicht.

Gemäß eines weiteren Aspekts der vorliegenden Erfindung weist der Sensorhalter wenigstens ein Haltemittel auf, welches ausgebildet ist, den aufgenommenen Temperatursensor in der Sensoraufnahme zu halten, wobei das Haltemittel vorzugsweise als ein endlos geschlossenes Band, besonders vorzugsweise als Gummiband, als geschlossene Schlauchschelle oder als geschlossener Kabelbinder, ausgebildet ist und bzw. oder das Haltemittel ist vorzugsweise als Verschlusselement, besonders vorzugsweise als verschließbarer Deckel, ausgebildet, welches vorzugsweise verrastbar ausgebildet ist. Die Verwendung eines Halteelements als zusätzliches Element, welches sowohl als separates Bauteil oder auch einstückig z.B. mit der Sensoraufnahme ausgebildet sein kann, kann die Wirkung des Halts des Temperatursensors bzw. dessen Messspitze und bzw. oder dessen Kabels in der Sensoraufnahme verbessern, wenngleich dies den Aufwand der Herstellung des Sensorhalters sowie dessen Anwendung erhöhen kann.

Das Haltemittel kann durch ein endlos geschlossenes Band realisiert werden, welches z.B. als endlos geschlossenes Gummiband über die Sensoraufnahme samt dort aufgenommenem Temperatursensor bzw. dessen Messspitze geführt werden kann. Dies kann einfach und schnell umgesetzt werden und einen wirkungsvollen Halt bewirken. Auch kann ein endlos geschlossenes Band durch eine Schlauchschelle oder durch einen Kabelbinder realisiert werden, welche um die Sensoraufnahme samt dort aufgenommenen Temperatursensor bzw. dessen Messspitze gelegt und zusammengezogen werden können. Auch dies kann die gewünschte Wirkung erreichen.

Alternativ oder zusätzlich kann ein Verschlusselement verwendet werden, um die Sensoraufnahme und bzw. oder den Kabelführungskanal von dessen offener Seite zu verschließen. Dies kann den Temperatursensor bzw. dessen Messspitze und bzw. oder dessen Kabel nicht nur in der Sensoraufnahme bzw. in dem Kabelführungskanal halten sondern gleichzeitig schützend abdecken und somit vor äußeren Einflüssen schützen. Dies kann beispielsweise als verschließbarer Deckel umgesetzt werden, welcher als separates Element seitlich aufgesetzt oder als einstückig ausgebildetes Element, z.B. über eine Materialschwächung mit z.B. der Sensoraufnahme verbunden, umgeklappt werden kann. Den Verschlussmechanismus dabei verrastend, z.B. durch wenigstens einen Rasthaken, welcher z.B. die Sensoraufnahme rückseitig auffedernd umgreifen kann, zu realisieren kann einen sicheren und einfach umzusetzenden Halt des Verschlusselements bedeuten, welcher auch wieder zerstörungsfrei aufgehoben werden kann. Dies kann vorteilhaft sein, um den Sensor z.B. aufgrund eines Defekts auszutauschen, ohne den Sensorhalter dabei vom Boden des Kühlmöbels lösen zu müssen, was die Gefahr einer späteren veränderten Positionierung mit sich bringen würde.

Gemäß eines weiteren Aspekts der vorliegenden Erfindung weist die Auflagefläche auf ihrer der ersten Sensoraufnahme abgewandten Seite zumindest abschnittsweise eine Klebeschicht, vorzugsweise eine Klebefolie, auf, welche ausgebildet ist, die Auflagefläche stoffschlüssig auf dem Boden des Kühlmöbels zu halten, und bzw. oder die Auflagefläche weist wenigstens eine Durchgangsbohrung auf, welche ausgebildet ist, ein Befestigungselement, vorzugsweise eine Schraube, aufzunehmen, so dass die Auflagefläche von dem Befestigungselement formschlüssig und bzw. oder kraftschlüssig auf dem Boden des Kühlmöbels gehalten werden kann.

Eine Klebeschicht kann eine einfache Möglichkeit sein, den Sensorhalter flexibel zu positionieren und dort zu befestigen. Dies über eine Klebefolie zu realisieren kann es ermöglichen, das Klebematerial bereits auf der Auflagefläche vorzusehen und dann die Positionierung vorzunehmen, so dass lediglich dort Klebematerial angewendet wird, wo auch ein Kontakt zwischen der Auflagefläche und dem Boden des Kühlmöbels erfolgt. Dabei wird die Klebefolie vorzugsweise bereits bei der Herstellung des Sensorhalters auf der Auflagefläche aufgebracht und z.B. mittels einer Abziehfolie geschützt, so dass ein selbstklebender Sensorhalter geschaffen werden kann. Dies kann die Anwendung des Sensorhalters vereinfachen.

Alternativ oder zusätzlich kann eine Durchgangsbohrung im Bereich der Auflagefläche vorgesehen werden. Dies kann ohne großen Aufwand, gerade bei einem Spritzgussteil, erfolgen. Durch diese Durchgangsbohrung kann z.B. eine Schraube geführt werden, um den Sensorhalter auf diese Art und Weise auf dem Boden des Kühlmöbels zu befestigen. Dies kann umständlicher als die Verwendung einer Klebefläche sein. Jedoch kann eine Schraubverbindung, welche zu einem formschlüssigen und bzw. oder kraftschlüssigen Halt führen kann, belastbarer sein. Auch kann eine flächige Klebeverbindung lediglich auf entsprechend großen und ebenen Flächen angewendet werden.

Vorzugsweise können beide Möglichkeiten kombiniert genutzt werden, indem der Sensorhalter zunächst auf dem Boden des Kühlmöbels aufgeklebt wird, um eine vorbestimmte Positionierung einzunehmen. Dort kann der Sensorhalter zusätzlich verschraubt werden, um die vorbestimmte Positionierung stärker zu sichern.

Gemäß eines weiteren Aspekts der vorliegenden Erfindung weist der Sensorhalter, vorzugsweise die Auflagefläche, wenigstens ein Identifikationselement auf, welches ausgebildet ist, das Kühlmöbel über den Sensorhalter eindeutig zu identifizieren, und bzw. oder der Sensorhalter, vorzugsweise die Auflagefläche, weist wenigstens ein Informationselement, vorzugsweise einen Schriftzug, auf, welches ausgebildet ist, wenigstens eine Information über den Sensorhalter optisch erfassbar bereitzustellen. Unter einem Identifikationselement wird eine Kennzeichnung des Sensorhalters verstanden, welche diesen individualisieren kann. Dies kann z.B. ein individueller Bar-Code oder QR-Code sein, welche auf kleinem Raum eine hohe Anzahl von Informationen aufweisen kann. Hierüber kann nicht nur der Sensorhalter identifiziert werden, sondern auch das Kühlmöbel. Dies kann es dem Betreiber eines Supermarkts bzw. einer Supermarktkette erleichtern bzw. ermöglichen, seine Kühlmöbel zu individualisieren. Dies kann die Wartung, die Reparatur sowie die Überwachung und Analyse des Energieverbrauchs erleichtern. Alternativ oder zusätzlich kann auch ein Informationselement verwendet werden, um Informationen über den Sensorhalter bereitzustellen. Dies können z.B. Herstellerangaben, Fertigungsangaben wie z.B. der Fertigungsmonat, das Ursprungsland etc. sowie eine CE-Kennzeichnung und dergleichen sein.

Zwei Ausführungsbeispiele und weitere Vorteile der Erfindung werden nachstehend im Zusammenhang mit den folgenden Figuren erläutert. Darin zeigt:
Fig. 1 eine schematische Darstellung eines Kühlmöbels von vorne;
Fig. 2 eine perspektivische schematische Darstellung eines Kühlmöbels von vorne;
Fig. 3 einen Längsschnitt der Darstellung der Fig. 2;
Fig. 4 einen horizontalen Schnitt der Darstellung der Fig. 2;
Fig. 5 eine perspektivische Darstellung einer unteren Vorderkante des Kühlmöbels mit herkömmlicher Positionierung des Temperatursensors;
Fig. 6 eine Draufsicht auf die Darstellung der Fig. 5;
Fig. 7 eine simulierte Temperaturverteilung im Kühlmöbel im Längsschnitt (links) sowie Ausschnitt hiervon (rechts);
Fig. 8 eine schematische Darstellung des Ausschnitts der Fig. 7;
Fig. 9 eine perspektivische schematische Darstellung eines unteren Bereichs des Kühlmöbels von vorne;
Fig. 10 eine perspektivische schematische Darstellung eines nicht erfindungsgemäßen Sensorhalters gemäß eines ersten Beispiels mit Temperatursensor von der Vorderseite;
Fig. 11 eine schematische Darstellung des Sensorhalters der Fig. 10 ohne Temperatursensor;
Fig. 12 eine perspektivische schematische Darstellung eines Sensorhalters eines erfindungsgemäßen Kühlmöbels gemäß eines Ausführungsbeispiels mit Temperatursensor von der Vorderseite;
Fig. 13 eine schematische Darstellung des Sensorhalters der Fig. 12 ohne Temperatursensor;
Fig. 14 eine perspektivische Darstellung des Sensorhalters der Fig. 12 ohne Temperatursensor von der Rückseite;
Fig. 15 die Darstellung der Fig. 14 mit verrastetem Verschlusselement;
Fig. 16 eine perspektivische Darstellung einer unteren Vorderkante des Kühlmöbels mit positioniertem Sensorhalter; und
Fig. 17 einen zeitlichen Verlauf von Rücklufttemperatur und Zulufttemperatur ohne und mit Anwendung der vorliegenden Erfindung.

Die o.g. Figuren werden in kartesischen Koordinaten betrachtet. Es erstreckt sich eine Längsrichtung X, welche auch als Tiefe X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

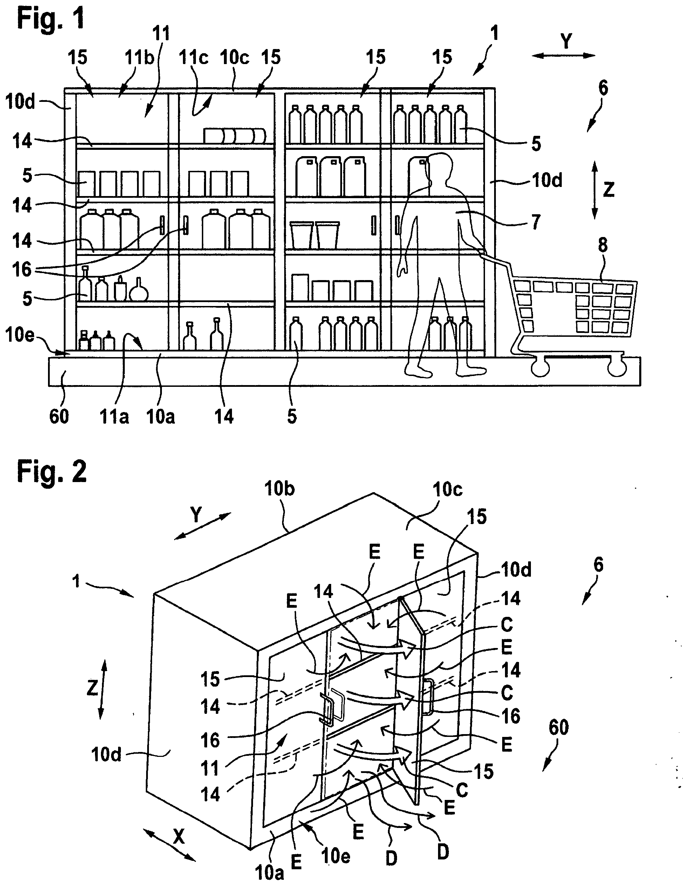

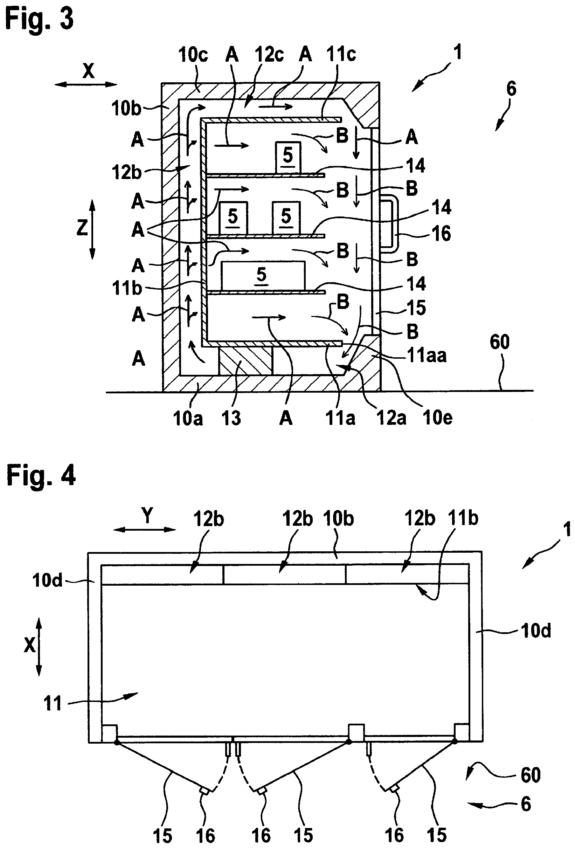

Fig. 1 zeigt eine schematische Darstellung eines Kühlmöbels 1 von vorne. Fig. 2 zeigt eine perspektivische schematische Darstellung eines Kühlmöbels 1 von vorne. Fig. 3 zeigt einen Längsschnitt der Darstellung der Fig. 2. Fig. 4 zeigt einen horizontalen Schnitt der Darstellung der Fig. 2. Als Kühlmöbel 1 wird ein vertürtes Kühlregal 1 betrachtet, welches in einem Verkaufsraum 6 eines Supermarkts eingesetzt und dort auf dem Boden 60 des Verkaufsraums 6 aufgestellt ist.

Das Kühlregal 1 weist einen Boden 10a, eine Rückwand 10b, eine Decke 10c sowie zwei Seitenwände 10d auf, welche ein Volumen einschließen, welches nach vorne zum Verkaufsraum 6 hin offen ist. Von dem Boden 10a erstreckt sich eine untere Vorderkante 10e des Kühlregals 1 in der Höhe Z, so dass das innere Volumen des Kühlregals 1 erst oberhalb der unteren Vorderkante 10e des Kühlregals 1 zum Verkaufsraum 6 hin zugänglich ist. Diese Öffnung wird durch mehrere Türen 15 abgeschlossen, wobei in den Fig. 1 und 2 unterschiedliche Varianten von Türen 15 und Kühlregalen 1 dargestellt sind. Die Türen 15 weisen jeweils einen Griff 16 auf, um z.B. von einem Kunden 7 durch Greifen und Ziehen des Griffs 16 geöffnet zu werden, siehe z.B. Fig. 2 und 4. Das Schließen der Türen 15 kann selbsttätig erfolgen.

Im Inneren des Kühlregals 1 ist ein Kühlraum 11 angeordnet, welcher durch einen Boden 11a, eine Rückwand 11b und eine Decke 11c gebildet wird, welche jeweils innenliegend und parallel zu den korrespondierenden Elementen des Kühlregals 1 verlaufen. Dabei wird ein Zwischenraum 12a zwischen dem Boden 10a des Kühlregals 1 und dem Boden 11a des Kühlraums 11, ein Zwischenraum 12b zwischen der Rückwand 10b des Kühlregals 1 und dem Boden 11b des Kühlraums 11 und ein Zwischenraum 12c zwischen der Decke 10c des Kühlregals 1 und der Decke 11c des Kühlraums 11 ausgebildet, siehe z.B. Fig. 3. Durch diese drei Zwischenräume 12a, 12b, 12c kann ein Luftstrom A, B aus dem Kühlraum 11 in Richtung des Bodens 10a des Kühlregals 1 und von der Decke 10c des Kühlregals 1 zurück in den Kühlraum 11 zirkulieren, siehe z.B. Fig. 3.

In dem Zwischenraum 12a zwischen dem Boden 10a des Kühlregals 1 und dem Boden 11a des Kühlraums 11 ist in der Tiefe X im hinteren Bereich eine Kühlungseinheit 13 in Form eines Verdampfers 13 mit Ventilator angeordnet, welche Luft aus dem Kühlraum 11 über diesen Zwischenraum 12a als Rückluft B ansaugen und abkühlen kann. Die abgekühlte Luft kann als Zuluft A über die anderen beiden Zwischenräume 12b, 12c wieder von oben sowie durch Öffnungen in der Rückwand 11b des Kühlraums 11 zurück in den Kühlraum 11 gelangen. Der Einlass des Zwischenraums 12a zwischen dem Boden 10a des Kühlregals 1 und dem Boden 11a des Kühlraums 11 wird durch die Innenseite der unteren Vorderkante 10e des Kühlregals 1 und einer dieser in der Tiefe X zugewandten Kante 11aa des Bodens 11a des Kühlraums 11 gebildet.

In dem Kühlraum 11 sind mehrere Regalböden 14 angeordnet, welche auch als Regalflächen 14 bezeichnet werden können. Die Regalböden 14 sind horizontal ausgerichtet, erstrecken sich im Wesentlichen in der Breite Y und sind in der Höhe Z zueinander beabstandet. Auf bzw. zwischen den Regalböden 14 können Waren 5 insbesondere in Form von Lebensmitteln 5, welche gekühlt bzw. gefroren verkauft werden, angeordnet werden. Ein Kunde 7 kann somit eine Tür 15 öffnen, die gekühlte bzw. gefrorene Ware 5 von einem Regalboden 14 bzw. dem Boden 11a des Kühlraums 11 entnehmen und sie in seinen Einkaufswagen 8 legen. Durch die Bewegung der Tür 15 in einer Bewegungsrichtung C nach außen kann dabei zum einen entweichende Luft D aus dem Kühlraum 11 in den Verkaufsraum 6 austreten und für die Kühlung der Waren 5 verloren gehen. Auch kann eindringende Luft E aus dem Verkaufsraum 6 in den Kühlraum 11 gelangen und die durch Vermischen die dortige Luft erwärmen, siehe Fig. 2.

Die Temperatur des Kühlraums 11 wird dadurch geregelt, dass eine Temperatur der Rückluft B erfasst wird und die Tätigkeit der Kühlungseinheit 13 entsprechend gewählt wird. Mit anderen Worten wird in dem Fall, dass eine zu hohe Temperatur sensorisch erfasst wird, die Kühlungseinheit 13 solange betrieben, bis ausreichend kühlere Luft erzeugt und von oben in den Kühlraum 11 eingeleitet wurden, so dass sensorisch eine ausreichend kalte Rückluft B erfasst wird.

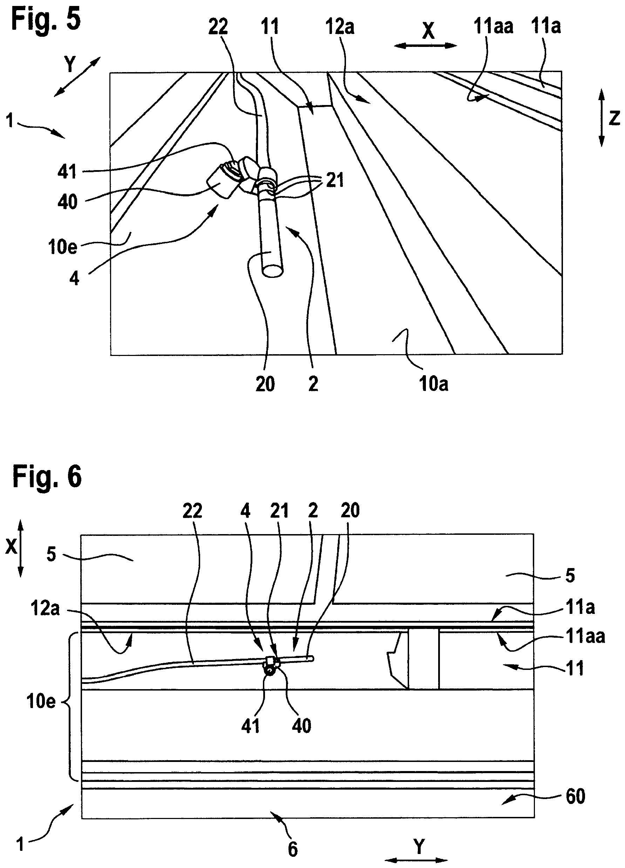

Fig. 5 zeigt eine perspektivische Darstellung einer unteren Vorderkante 10e des Kühlregals 1 mit herkömmlicher Positionierung des Temperatursensors 2. Fig. 6 zeigt eine Draufsicht auf die Darstellung der Fig. 5. Die untere Vorderkante 10e des Kühlregals 1 ist auf ihrer Innenseite bogenförmig ausgebildet, so dass der Luftstrom der Rückluft B, welcher zwischen der unteren Vorderkante 10a des Kühlregals 1 und der Kante 1aa des Bodens 11a des Kühlraums 11 hindurch in den Zwischenraum 12a zwischen dem Boden 10a des Kühlregals 1 und den Boden 11a des Kühlraums 11 gelangt, an dieser Stelle vorbeigeführt und dabei etwa rechtwinkelig umgelenkt wird.

In diesem Bereich wird bisher üblicherweise ein Temperatursensor 2, üblicherweise nachträglich bei bestehenden Kühlregalen 1, von Handwerkern angebracht, um die Temperatur des Luftstroms der Rückluft B sensorisch zu erfassen. Der Temperatursensor 2 weist eine Messspitze 20 auf, an welcher die Messung der Temperatur z.B. mittels eines NTC-Sensorelements (negative temperature coefficient) erfolgt. Die Messspitze 20 ist mittels eines Kabels 22 mit einer Auswerteeinheit (nicht dargestellt) verbunden, in der die Sensorwerte ggfs. verstärkt, gefiltert oder auf andere Art und Weise aufbereitet werden können. Die Sensorwerte können dann der Temperaturregelung des Kühlregals 1 zur Verfügung gestellt werden. Die Messspitze 20 ist auf dem Kabel 22 verkrimpt, so dass sich drei ringförmige Einschnürungen 21 der Messspitze 2 bilden.

Im Bereich der Einschnürungen 21 der Messspitze 2 wird der Temperatursensor 2 von einer herkömmlichen Befestigungsanordnung 4 auf der Innenseite der unteren Vorderkante 10e des Kühlregals 1 gehalten. Die Befestigungsanordnung 4 besteht aus einer Schelle 40 aus Kunststoff, welche um den Temperatursensor 2 herum gelegt und mittels eines Befestigungselements 41 in Form einer Schraube 41 auf der Innenseite der unteren Vorderkante 10a des Kühlregals 1 befestigt ist.

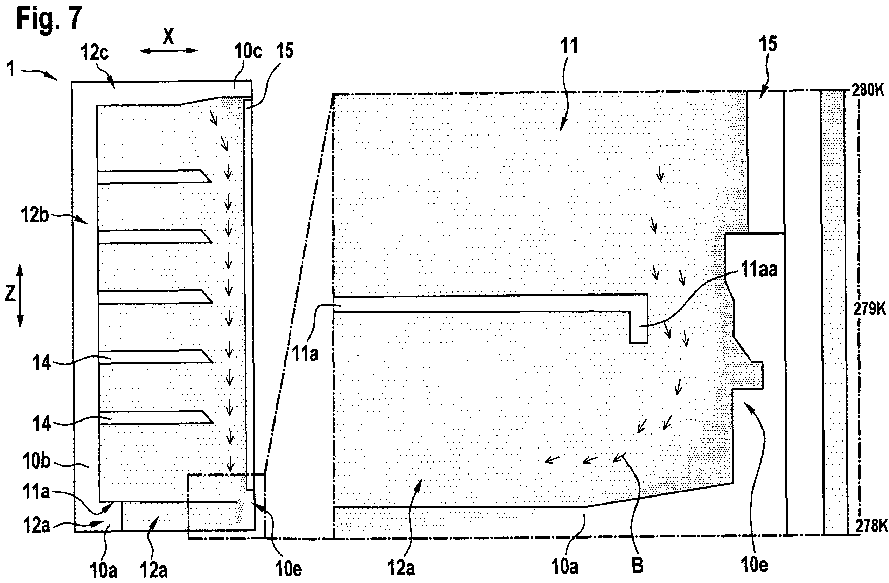

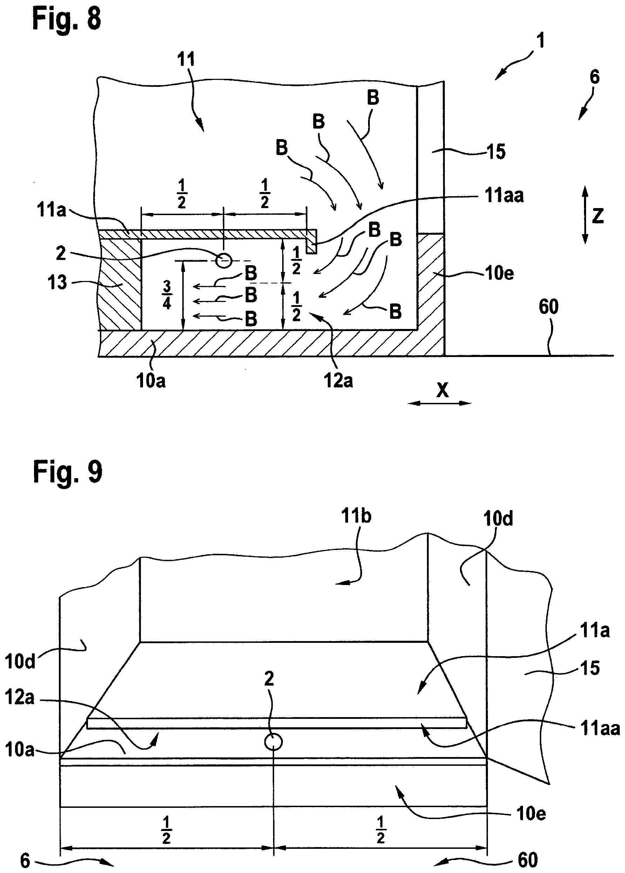

Fig. 7 zeigt eine simulierte Temperaturverteilung im Kühlmöbel 1 im Längsschnitt (links) sowie Ausschnitt hiervon (rechts). Fig. 8 zeigt eine schematische Darstellung des Ausschnitts der Fig. 7. Fig. 9 zeigt eine perspektivische schematische Darstellung eines unteren Bereichs des Kühlmöbels 1 von vorne. Dargestellt ist die Temperaturverteilung sowie die Luftströmung der Rückluft B im Bereich der Innenseite der unteren Vorderkante 10e des Kühlregals 1 in den Zwischenraum 12a zwischen dem Boden 10a des Kühlregals 1 und dem Boden 11a des Kühlraums 11. Betrachtet werden dabei zwei Temperatursensoren 2.

Die Position des Temperatursensors 2 rechts unten unmittelbar am Boden 10a des Kühlregals 1 charakterisiert eine bisher übliche typische Sensoranordnung, welche z.B. von Handwerkern bei der nachträglichen Montage gewählt wird, weil dieser Bereich der unteren Vorderkante 10e des Kühlregals 1 im laufenden Betrieb des Kühlregals 1 einfach, schnell sowie bequem und auch im laufende Betrieb des Supermarkts zugänglich ist, vgl. Fig. 5 und 6. Dies führt jedoch dazu, dass der Temperatursensor 2 sehr nahe am Boden 10a des Kühlregals 1 sowie an der unteren Vorderkante 10e des Kühlregals 1 angeordnet ist und somit von dem wärmeleitenden Boden 10a des Kühlregals 1 und bzw. oder von der wärmeleitenden unteren Vorderkante 10e des Kühlregals 1 z.B. durch Wärmeleitung über die Befestigungsanordnung 4, durch Wärmestrahlung sowie durch Konvektion negativ beeinflusst werden kann. Ferner können in diesem Bereich eher turbulente Strömungen vorliegen. Aus diesen Gründen wird in diesem Bereich, wie die Temperaturverteilung der Fig. 7 zeigt, eine eher höhere Temperatur erfasst als tatsächlich im Inneren des Kühlraums 11 vorliegt, siehe linker oberer Bereich der Fig. 7 oberhalb des Bodens 11a des Kühlraums 11. Dies kann zu einer unnötigen Kühlung des Kühlraums 11 führen, da aufgrund der ungünstigen Positionierung des Temperatursensors 2 seitens der Regelung von einer höheren Lufttemperatur im Kühlraum 11 ausgegangen wird als dort tatsächlich vorliegt.

Erfindungsgemäß wird der Temperatursensor 2 daher in einem vollkommen anderen Bereich als bisher üblich positioniert, wie durch den Temperatursensor 2 links unterhalb des Bodens 11a des Kühlraums 11 in der Fig. 7 dargestellt wird. Diese wird erfindungsgemäß in einem Bereich positioniert, wo eine Temperatur der Rückluft B erfasst werden kann, welche deutlich repräsentativer für die tatsächliche Lufttemperatur im Innenraum des Kühlraums 11 ist als die von dem zuvor beschriebenen Temperatursensor 2 erfasste Rücklufttemperatur. Hierdurch kann die Qualität der sensorisch erfassten Temperatur der Rückluft B als Eingangsgröße der Regelung verbessert werden, was sich positiv auf den Betrieb und reduzierend auf den Energieverbrauch des Kühlregals 1 auswirken kann. Auch kann der Betrieb des Kühlkreislaufs reduziert und entlastet werden.

Die erfindungsgemäße Positionierung des Temperatursensors 2 erfolgt dabei derart, dass der Temperatursensor 2 in der Höhe Z in der oberen Hälfte des Zwischenraums 12a zwischen dem Boden 10a des Kühlregals 1 und dem Boden 11a des Kühlraums 11 und genauer gesagt auf drei Viertel der Höhe des Zwischenraums 12a angeordnet wird. Hierdurch kann der Temperatursensor 2 ausreichend weit vom Boden 10a des Kühlregals 1 beabstandet werden, um von diesem nicht negativ beeinflusst zu werden. Gleichzeitig kann der Temperatursensor 2 in der Höhe in Luftschichten der Rückluft B positioniert werden, welche eine Temperatur aufweisen, die der tatsächlich im Inneren des Kühlraums vorliegenden Temperatur entspricht, siehe Fig. 8. Auch kann der Temperatursensor 2 von Verschmutzungen ferngehalten werden, welche sich vorwiegend auf dem Boden 10a des Kühlregals 1 ansammeln werden.

In der Tiefe X ist der Temperatursensor 2 etwa mittig zwischen der Kante 11aa des Bodens 11a des Kühlraums 11 und der Kühlungseinheit 13 angeordnet, siehe Fig. 8. Dies kann ebenfalls begünstigen, dass eine Temperatur der Rückluft B erfasst werden kann, welche der tatsächlich im Inneren des Kühlraums vorliegenden Temperatur entspricht.

In der Breite Y ist der Temperatursensor 2 etwa mittig über die Breite einer Tür 15 bzw. der korrespondierenden Türöffnung angeordnet, siehe Fig. 9. Hierdurch kann der Temperatursensor 2 ausreichend weit von den Seitenwänden 10d des Kühlregals 10 beabstandet werden, um durch diese bei der Temperaturerfassung nicht negativ beeinflusst zu werden. Auch dies kann dafür sorgen, dass eine Temperatur der Rückluft B erfasst werden kann, welche der tatsächlich im Inneren des Kühlraums vorliegenden Temperatur entspricht.

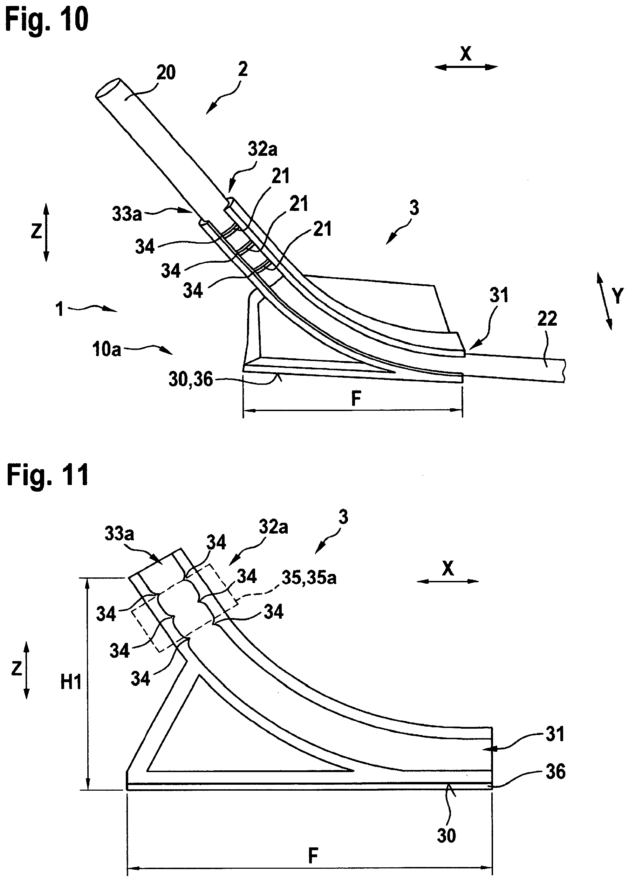

Fig. 10 zeigt eine perspektivische schematische Darstellung eines Sensorhalters 3 gemäß eines ersten Beispiels mit Temperatursensor 2 von der Vorderseite. Fig. 11 zeigt eine schematische Darstellung des Sensorhalters 3 der Fig. 10 ohne Temperatursensor 2. Mittels eines derartigen Sensorhalters 3 kann die zuvor beschriebene Positionierung des Temperatursensors 2 einfacher, definierter und reproduzierbar als ohne ein derartiges Hilfsmittel vorgenommen werden. Der Sensorhalter 3 kann auch als Abstandshalter 3 bezeichnet werden.

Der Sensorhalter 3 weist eine Auflagefläche 30 auf, welche rechteckig ausgebildet ist und beispielsweise eine Kantenlänge von ca. 4,5 cm und ca. 6,0 cm aufweist. Auf der Unterseite, welche beim bestimmungsgemäßen Gebrauch auf dem Boden 10a des Kühlregals 1 angeordnet wird, ist eine Klebeschicht 36 in Form einer Klebefolie 36 aufgebracht, welche mit einer Schutzfolie abgedeckt ist, um ihre Klebewirkung zu bewahren und vor Verschmutzung zu schützen. Wird die Schutzfolie zum Gebrauch entfernt, so kann der Sensorhalter 3 auf dem Boden 10a des Kühlregals 1 aufgeklebt und hierdurch gehalten werden.

Der Sensorhalter 3 weist auf der gegenüberliegenden Seite einen Kabelführungskanal 31 auf, in dem das Kabel 22 des Temperatursensors 2 geführt werden kann. Der Kabelführungskanal 31 ist etwa U-förmig ausgebildet und verengt sich an seinen Kanten leicht zueinander hin, so dass das aufgenommene Kabel 22 formschlüssig und kraftschlüssig mit einer gewissen geringen Kraft im Kabelführungskanal 31 gehalten werden kann. Hierzu muss das Kabel 22 in den Kabelführungskanal 31 leicht eingedrückt werden, damit sich die Kanten des Kabelführungskanals 31 federnd aufbiegen und hierdurch das Kabel 22 zwischen sich aufnehmen können.

Der Kabelführungskanal 31 geht in ein erstes Abstandselement 32a über, welches von der Auflagefläche 30 in der Höhe Z nach oben weg zeigt. Der Kabelführungskanal 31 und das erste Abstandselement 32a verlaufen gemeinsam von der horizontalen Ausrichtung in eine Ausrichtung von ca. 45° gegenüber der Horizontalen, so dass das erste Abstandselement 32a auch als schrägstehendes Abstandselement 32a bezeichnet werden kann. Das erste Abstandselement 32a weist eine erste Sensoraufnahme 33a auf, in welcher ein Temperatursensor 2 derart aufgenommen werden kann, dass seine Messspitze 21 von dem Sensorhalter 3 weg sowie in der Höhe Z schräg nach oben zeigt und das Kabel 22 von dem Kabelführungskanal 31 aus dem Sensorhalter 3 horizontal zur Seite herausgeführt wird.

Die erste Sensoraufnahme 32a weist drei Rastmarken 34 auf, welche jeweils als radial nach innen zeigende und ringförmig umlaufende Kanten oder Vorsprünge ausgebildet sind. Die drei Rastmarken 34 korrespondieren mit den drei Einschnürungen 21 der Messspitze 20, so dass die Messspitze 20 durch die Rastmarken 34 nicht nur in ihrer Erstreckungsrichtung mit einer gewissen Kraft gehalten sondern auch eindeutig positioniert werden kann, indem die drei Rastmarken 34 genau in die drei Einschnürungen 21 eingreifen. Dies kann die Qualität der Positionierung des Temperatursensors 2 in dem Sensorhalter 3 und damit auch die Qualität der mittels des Temperatursensors 2 in dem Kühlregal 1 erfassten Temperatur der Rückluft B verbessern.

Um den Halt des aufgenommenen Temperatursensors 2 in der ersten Sensoraufnahme 32a zu verbessern bzw. dauerhaft sicherzustellen, kann der Temperatursensor 2 zunächst wie zuvor beschrieben in der ersten Sensoraufnahme 32a gehalten werden. Anschließend kann der Temperatursensor 2 dort mit einem Haltemittel 35 endgültig fixiert werden. Hierzu kann beispielsweise ein endlos geschlossenes Band 35a verwendet werden, welches z.B. ein endlos geschlossenes Gummiband 35a sein kann, welches im aufgeweiteten Zustand von oben über das Ende der Messspitze 20 geführt und etwa im Bereich der Rastmarken 34 um die erste Sensoraufnahme 32a herum angeordnet wird, siehe Fig. 11. Alternativ könnten auch eine Schlauchschelle 32a oder ein Kabelbinder 32a verwendet werden, welche in diesem Bereich um die erste Sensoraufnahme 32a herum gelegt, geschlossen und angezogen werden könnten. Dies kann jeweils zu einem dauerhaften Halt des aufgenommenen Temperatursensors 2 führen.

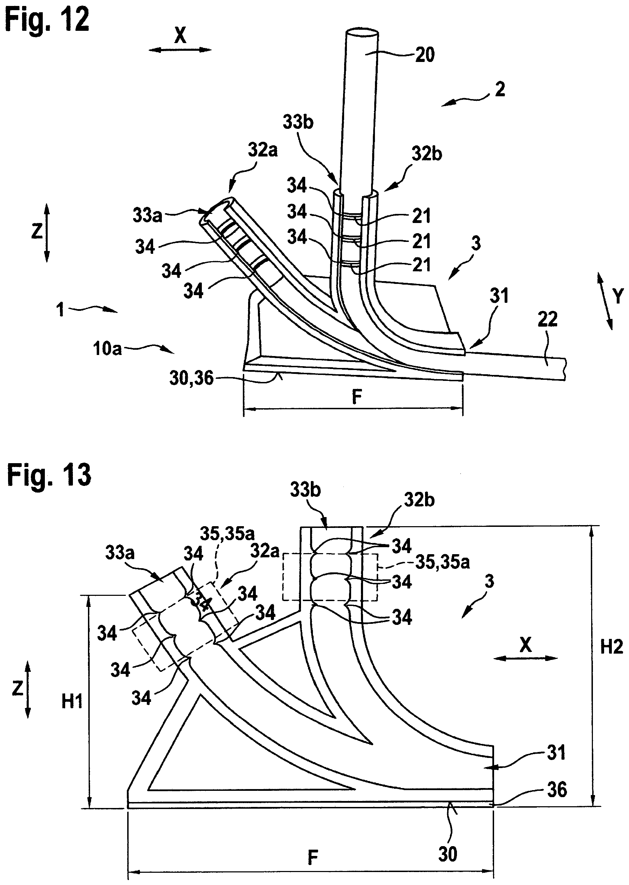

Fig. 12 zeigt eine perspektivische schematische Darstellung eines Sensorhalters 3 eines erfindungsgemäßen Kühlmöbels gemäß eines Ausführungsbeispiels mit Temperatursensor 2 von der Vorderseite. Fig. 13 zeigt eine schematische Darstellung des Sensorhalters 3 der Fig. 12 ohne Temperatursensor 2. Erfindungsgemäß weist der Sensorhalter 3 ein erstes, scrhrägstehendes Abstandselement 32a mit einer ersten Sensoraufnahme 33a und ein zweites, vertikales Abstandselement 32b mit einer zweiten Sensoraufnahme 33b auf. Der Kabelführungskanal 31 verzweigt sich entsprechend, so dass das Kabel 22 zu der jeweils verwendeten Sensoraufnahme 33a, 33b wie zuvor beschrieben geführt werden kann. Beide Sensoraufnahmen 33a, 33b sind wie zuvor beschrieben ausgebildet.

Aufgrund der unterschiedlichen Ausrichtungen der beiden Abstandselemente 32a, 32b weisen die beiden Sensoraufnahmen 33a, 33b bei vergleichbarer Erstreckung unterschiedliche Höhen H1, H2 auf, in welcher der aufgenommenen Temperatursensor 2 bzw. dessen Messspitze 20 jeweils angeordnet wird. Dies führt zu einer ersten Höhe H1 von ca. 6 cm für die erste Sensoraufnahme 33a und zu einer zweiten Höhe H2 von ca. 8 cm für die zweite Sensoraufnahme 33b. Der Sensorhalter 3 gemäß des zweiten Ausführungsbeispiels kann somit dazu verwendet werden, den Temperatursensor 2 in zwei unterschiedlichen Höhen H1, H2 definiert zu positionieren. Dies kann erforderlich sein, da nicht jedes Kühlregal 1 an der gewünschten Position die erforderliche Höhe zur Verwendung der zweiten Höhe H2 aufweisen kann, so dass in diesem Fall eine Positionierung des Temperatursensors 2 mittels desselben Sensorhalters 3 in der geringeren ersten Höhe H1 erfolgen kann.

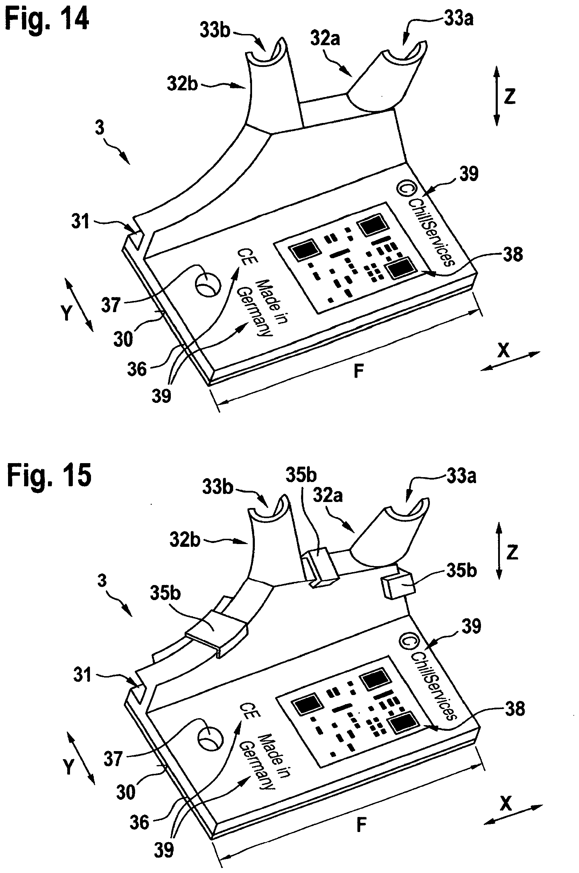

Fig. 14 zeigt eine perspektivische Darstellung des Sensorhalters 3 eines erfindungsgemäßen Kühlmöbels gemäß des zweiten Ausführungsbeispiels ohne Temperatursensor 2 von der Rückseite. In dieser Ansicht ist eine Durchgangsöffnung 37 zu erkennen, welche im Bereich neben den beiden Abstandselementen 32a, 32b angeordnet ist. Durch die Durchgangsöffnung 37 kann eine Schraube (nicht dargestellt) oder ein anderes Befestigungselement geführt werden, um den Sensorhalter 3 zusätzlich auf dem Boden 10a des Kühlregals 1 zu befestigen. Dies kann zusätzlich zu der zuvor beschriebenen Klebung erfolgen, um die Positionierung besser zu sichern. Die Öffnung im Boden 10a des Kühlregals 1, welche zur Aufnahme der Schraube erforderlich ist, kann durch die Klebefolie 36 zumindest in der Horizontalen abgedichtet werden, so dass eine Undichtigkeit des Bodens 10a des Kühlregals 1 auch bei Verwendung einer Schraube vermieden werden kann. Ferner ist in dieser Ansicht ein Identifikationselement 38 zu erkennen, welches als QR-Code 38 ausgeführt und geeignet ist, sowohl den Sensorhalter 3 als auch das entsprechende Kühlregal 1 eindeutig zu identifizieren. Dies kann für den Betreiber des Supermarkts bzw. das Wartungspersonal der Kühlmöbel 1 des Supermarkts hilfreich sein, um die einzelnen Kühlmöbel 1 eindeutig identifizieren zu können. Des Weiteren sind auch mehrere Informationselemente 39 vorhanden, welche z.B. den Hersteller des Sensorhalters 3, dessen Fertigungsmonat, das Ursprungsland, eine CE-Kennzeichnung und dergleichen anzeigen können. All diese Merkmale können ebenso bei einem Sensorhalter 3 gemäß des ersten Ausführungsbeispiels angewendet werden.

Fig. 15 zeigt die Darstellung der Fig. 14 mit verrastetem Verschlusselement 35b. In diesem Fall wird bei einem Sensorhalter 3 eines erfindungsgemäßen Kühlmöbels gemäß des Ausführungsbeispiels der Kabelführungskanal 31 mit einem Verschlusselement 35b in Form eines aufgesetzten Deckels 35b verschlossen, so dass ein dort aufgenommenes Kabel 22 nicht nur gehalten sondern auch schützend abgedeckt werden kann. Der Deckel 35b ist als separates Bauteil ausgebildet und wird durch mehrere Rasthaken auf der Rückseite des Kabelführungskanals 31 gehalten. Das Aufsetzen des Deckels 35b erfolgt von der Vorderseite des Sensorhalters 3 unter Auffederung der Rasthaken.

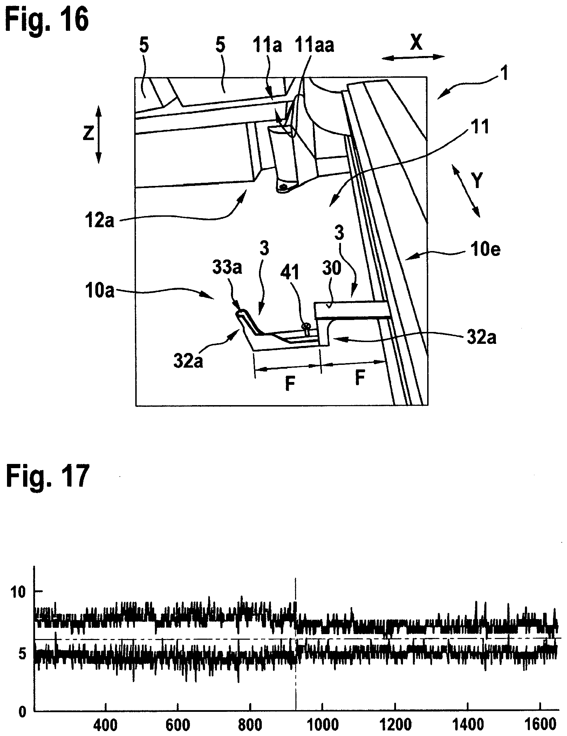

Fig. 16 zeigt eine perspektivische Darstellung einer unteren Vorderkante 10e des Kühlmöbels 1 mit positioniertem Sensorhalter 3. Es gehört auch zur vorliegenden Erfindung, dass ein Sensorhalter 3 eines erfindungsgemäßen Kühlmöbels verwendet werden kann, um einen weiteren Sensorhalter 3 zu positionieren. Hierdurch kann ein Sensorhalter 3 umgedreht mit der zweiten Sensoraufnahme 33b auf dem Boden 10a des Kühlregals 1 aufgesetzt und mit der Öffnung des Kabelführungskanals 31 an der Innenseite der unteren Vorderkante 10e des Kühlregals 1 angelegt werden. Nun kann ein weiterer zu montierender Sensorhalter 3 in der Tiefe X an den ersten Sensorhalter 3 angelegt werden. In dieser Positionierung kann die Montage des weiteren Sensorhalters 3 erfolgen. Dann kann der erste Sensorhalter 3 wieder entfernt werden. Die Erstreckung F des Sensorhalters 3 in der Tiefe X ist entsprechend gewählt, vgl. Fig. 10 bis 16, dass dies ermöglicht werden kann.

Dabei wird in der Fig. 16 eine Ausführungsform eines nicht erfindungsgemäßen Sensorhalters 3 mit einem ersten sich vertikal erstreckenden Abstandselement 33a gezeigt, welche funktionell den anderen beiden Ausführungsbeispielen entspricht, hier jedoch nicht näher beschrieben werden soll.

Fig. 17 zeigt einen zeitlichen Verlauf von Rücklufttemperatur und Zulufttemperatur ohne und mit Anwendung der vorliegenden Erfindung. Es werden die Rücklufttemperatur (oben) und die heruntergekühlte Zulufttemperatur (unten) übereinander über die Zeit dargestellt, wobei in dem ersten, linken Teil des zeitlichen Verlaufs eine herkömmliche Sensorpositionierung und im zweiten, rechten Teil eine erfindungsgemäße Sensorpositionierung verwendet wird.

Wie zuvor beschrieben, kann durch eine erfindungsgemäß gewählte Position des Temperatursensors 2 eine Rücklufttemparatur erfasst werden, welche eher der tatsächlich im Inneren des Kühlraums 11 vorliegenden Lufttemperatur entspricht. Diese ist, wie der Vergleich der beiden Zeitbereiche zeigt, geringer als bisher sensorisch erfasst. Entsprechend geringer ist auch die Temperaturdifferenz zwischen Zuluft und Rückluft, welcher durch aktive Abkühlung tatsächlich entgegengewirkt werden muss. Dies führt, wie bereits zuvor beschrieben, zu einem geringeren Energieverbrauch sowie zu einem geringeren und gleichmäßigeren Betrieb der Kühlungseinheit 13.

### BEZUGSZEICHENLISTE (Teil der Beschreibung)

- A: Zuluft; Zuluftstrom
- B: Rückluft; Rückluftstrom; Abluft; Abluftstrom
- C: Öffnungsrichtung einer Tür 15
- D: entweichende Luft des Kühlraums 11
- E: eindringende Luft des Verkaufsraums 6
- F: Erstreckung des Sensorhalters 3 in der Tiefe X
- H1: erste Höhe; Höhe der ersten Sensoraufnahme 33a
- H2: zweite Höhe; Höhe der zweiten Sensoraufnahme 33b

- X: Längsrichtung; Tiefe
- Y: Querrichtung; Breite
- Z: vertikale Richtung; Höhe

- 1: Kühlmöbel; (vertürtes) Kühlregal
- 10a: Boden des Kühlmöbels 1
- 10b: Rückwand des Kühlmöbels 1
- 10c: Decke des Kühlmöbels 1
- 10d: Seitenwände des Kühlmöbels 1
- 10e: untere Vorderkante des Kühlmöbels 1
- 11: Kühlraum
- 11a: Boden des Kühlraums 11
- 11aa: Kante des Bodens 11a des Kühlraums 11
- 11b: Rückwand des Kühlraums 11
- 11c: Decke des Kühlraums 11
- 12a: Zwischenraum zwischen Boden 10a des Kühlmöbels 1 und Boden 11a des Kühlraums 11
- 12b: Zwischenraum zwischen Rückwand 10b des Kühlmöbels 1 und Rückwand 11b des Kühlraums 11
- 12c: Zwischenraum zwischen Decke 10c des Kühlmöbels 1 und Decke 11c des Kühlraums 11
- 13: Kühlungseinheit; Verdampfer mit Ventilator
- 14: Regalböden; Regalflächen
- 15: Türen des Kühlmöbels 1
- 16: Türgriff einer Tür 15

- 2: Temperatursensor
- 20: Messspitze des Temperatursensors 2
- 21: Einschnürungen der Messspitze 20
- 22: Kabel des Temperatursensors 2

- 3: Sensorhalter; Abstandshalter
- 30: Auflagefläche
- 31: Kabelführungskanal
- 32a: erstes Abstandselement; schrägstehendes Abstandselement
- 32b: zweites Abstandselement; vertikales Abstandselement
- 33a: erste Sensoraufnahme
- 33b: zweite Sensoraufnahme
- 34: Rastmarken
- 35: Haltemittel
- 35a: endlos geschlossenes Band; endlos geschlossenes Gummiband; geschlossene Schlauchschelle; geschlossener Kabelbinder
- 35b: (verrastbares) Verschlusselement; verschließbarer Deckel
- 36: Klebeschicht; Klebefolie
- 37: Durchgangsöffnung
- 38: Identifikationselement; Bar-Code; QR-Code
- 39: Informationselement; Schriftzug

- 4: herkömmliche Befestigungsanordnung des Temperatursensors 2
- 40: Schelle
- 41: Befestigungselement; Schraube

- 5: Ware; Lebensmittel

- 6: Verkaufsraum
- 60: Boden des Verkaufsraums 6

- 7: Kunde

- 8: Einkaufswagen

## Patentansprüche

1. Kühlmöbel (1), vorzugsweise Kühlregal (1), besonders vorzugsweise vertürtes Kühlregal (1),
mit einem Kühlraum (11) zur Aufnahme zu kühlender und/oder zu gefrierender Waren (5), vorzugsweise Lebensmittel (5), und
mit wenigstens einem Temperatursensor (2), welcher in dem Kühlmöbel (1) derart angeordnet ist, dass eine Lufttemperatur einer Rückluft (B) des Kühlraums (11) erfasst werden kann, wobei der Temperatursensor (2) in einem Bereich des Kühlmöbels (1), vorzugsweise eines Bodens (11) des Kühlmöbels (1), angeordnet ist, in welchem eine mittlere Temperatur der Rückluft (B) erfasst werden kann,
**gekennzeichnet durch**
einen Sensorhalter (3)
mit einer Auflagefläche (30), welche auf einem Boden (10a) des Kühlmöbels (1) angeordnet ist,
mit wenigstens einer ersten Sensoraufnahme (33a), welche den Temperatursensor (2) hält,
mit wenigstens einem ersten Abstandselement (32a), welches die erste Sensoraufnahme (33a) gegenüber der Auflagefläche (30) in der Höhe (Z) in einer ersten Höhe (H1) anordnet,
mit wenigstens einer zweiten Sensoraufnahme (33b), welche ausgebildet ist, den Temperatursensor (2) alternativ zur ersten Sensoraufnahme (33a) zu halten, und
mit wenigstens einem zweiten Abstandselement (32b), welches die zweite Sensoraufnahme (33b) gegenüber der Auflagefläche (30) in der Höhe (Z) in einer zweiten Höhe (H2) anordnet,
wobei die erste Höhe (H1) und die zweite Höhe (H2) verschieden sind.

2. Kühlmöbel (1) nach Anspruch 1, **dadurch gekennzeichnet, dass**
der Temperatursensor (2) gegenüber einem Boden (11) des Kühlmöbels (1) derart in der Höhe (Z) beabstandet angeordnet ist, dass eine repräsentative, vorzugsweise mittlere, Temperatur der Rückluft (B) erfasst werden kann.

3. Kühlmöbel (1) nach Anspruch 1 oder 2, **dadurch gekennzeichnet, dass**
der Temperatursensor (2) gegenüber einer unteren Vorderkante (10e) des Kühlmöbels (1) derart in der Tiefe (X) beabstandet angeordnet ist, dass eine repräsentative, vorzugsweise mittlere, Temperatur der Rückluft (B) erfasst werden kann.

4. Kühlmöbel (1) nach einem der vorangehenden Ansprüche, **dadurch gekennzeichnet, dass**
das Kühlmöbel (1) einen Boden (10a) aufweist, und dass
der Kühlraum (11) einen Boden (11a) aufweist, welcher oberhalb des Bodens (10a) des Kühlmöbels (1) angeordnet ist,
wobei zwischen dem Boden (10a) des Kühlmöbels (1) und dem Boden (11a) des Kühlraums (11) ein Zwischenraum (12a) gebildet wird,
wobei der Temperatursensor (2) innerhalb des Zwischenraums (12a) zwischen dem Boden (10a) des Kühlmöbels (1) und dem Boden (11a) des Kühlraums (11) angeordnet ist.

5. Kühlmöbel (1) nach Anspruch 4, **dadurch gekennzeichnet, dass**
der Temperatursensor (2) innerhalb des Zwischenraums (12a) zwischen dem Boden (10a) des Kühlmöbels (1) und dem Boden (11a) des Kühlraums (11) in der Höhe (Z) innerhalb der oberen Hälfte, vorzugsweise auf etwa drei Viertel der Höhe des Zwischenraums (12a), angeordnet ist.

6. Kühlmöbel (1) nach Anspruch 4 oder 5, **dadurch gekennzeichnet, dass**
der Temperatursensor (2) innerhalb des Zwischenraums (12a) zwischen dem Boden (10a) des Kühlmöbels (1) und dem Boden (11a) des Kühlraums (11) in der Tiefe (X) zu einer Kante (11aa) des Bodens (11a) des Kühlraums (11) derart beabstandet angeordnet ist, dass eine repräsentative, vorzugsweise mittlere, Temperatur der Rückluft (B) erfasst werden kann.

7. Kühlmöbel (1) nach einem der Ansprüche 4 bis 6, **dadurch gekennzeichnet, dass**
innerhalb des Zwischenraums (12a) zwischen dem Boden (10a) des Kühlmöbels (1) und dem Boden (11a) des Kühlraums (11) eine Kühlungseinheit (13) angeordnet ist,
wobei der Temperatursensor (2) in der Tiefe (X) zwischen einer Kante (llaa) des Bodens (11a) des Kühlraums (11) und der Kühlungseinheit (13) in der mittleren Hälfte, vorzugsweise im mittleren Viertel, besonders vorzugsweise etwa mittig, angeordnet ist.

8. Kühlmöbel (1) nach einem der vorangehenden Ansprüche, **dadurch gekennzeichnet, dass**
das Kühlmöbel (1) wenigstens eine Tür (15) aufweist, und dass
der Temperatursensor (2) in der Breite (Y) in der mittleren Hälfte der Tür (15), vorzugsweise im mittleren Viertel der Tür (15), besonders vorzugsweise etwa mittig zur Tür (15), angeordnet ist.

9. Kühlmöbel (1) nach einem der vorangehenden Ansprüche, **dadurch gekennzeichnet, dass**
die erste Sensoraufnahme (33a) und/oder die zweite Sensoraufnahme (33b) wenigstens eine Rastmarke (34), vorzugsweise eine Mehrzahl von Rastmarken (34), aufweist, welche ausgebildet ist, in wenigstens eine korrespondierende Einschnürung (21) des Temperatursensors (2), vorzugsweise einer Messspitze (20) des Temperatursensors (2), einzugreifen.

10. Kühlmöbel (1) nach einem der vorangehenden Ansprüche, **gekennzeichnet durch**
wenigstens einen Kabelführungskanal (31), welcher ausgebildet ist, ein korrespondierendes Kabel (22) des Temperatursensors (2) aufzunehmen,
wobei der Kabelführungskanal (31) vorzugsweise derart eng ausgebildet ist, so dass das Kabel (22) des Temperatursensors (2) kraftschlüssig gehalten werden kann, und/oder
wobei der Kabelführungskanal (31) vorzugsweise sich derart randseitig verjüngend ausgebildet ist, so dass das Kabel (22) des Temperatursensors (2) kraftschlüssig und/oder formschlüssig gehalten werden kann.

11. Kühlmöbel (1) nach einem der vorangehenden Ansprüche, **gekennzeichnet durch**
wenigstens ein Haltemittel (35), welches ausgebildet ist, den aufgenommenen Temperatursensor (2) in der Sensoraufnahme (33a; 33b) zu halten,
wobei das Haltemittel (35) vorzugsweise als ein endlos geschlossenes Band (35a), besonders vorzugsweise als Gummiband (35a), als geschlossene Schlauchschelle (35a) oder als geschlossener Kabelbinder (35a), ausgebildet ist, und/oder
wobei das Haltemittel (35) vorzugsweise als Verschlusselement (35b), besonders vorzugsweise als verschließbarer Deckel (35b), ausgebildet ist, welches vorzugsweise verrastbar ausgebildet ist.

12. Kühlmöbel (1) nach einem der vorangehenden Ansprüche, **dadurch gekennzeichnet, dass**
die Auflagefläche (30) auf ihrer der ersten Sensoraufnahme (33a) abgewandten Seite zumindest abschnittsweise eine Klebeschicht (36), vorzugsweise eine Klebefolie (36), aufweist, welche ausgebildet ist, die Auflagefläche (30) stoffschlüssig auf dem Boden (10a) des Kühlmöbels (1) zu halten, und/oder
die Auflagefläche (30) wenigstens eine Durchgangsbohrung (37) aufweist, welche ausgebildet ist, ein Befestigungselement (41), vorzugsweise eine Schraube (41), aufzunehmen, so dass die Auflagefläche (30) von dem Befestigungselement (41) formschlüssig und/oder kraftschlüssig auf dem Boden (10a) des Kühlmöbels (1) gehalten werden kann.

13. Kühlmöbel (1) nach einem der vorangehenden Ansprüche, **dadurch gekennzeichnet, dass**
der Sensorhalter (3), vorzugsweise die Auflagefläche (30), wenigstens ein Identifikationselement (38) aufweist, welches ausgebildet ist, das Kühlmöbel (1) über den Sensorhalter (3) eindeutig zu identifizieren, und/oder
der Sensorhalter (3), vorzugsweise die Auflagefläche (30), wenigstens ein Informationselement (39), vorzugsweise einen Schriftzug (39), aufweist, welches ausgebildet ist, wenigstens eine Information über den Sensorhalter (3) optisch erfassbar bereitzustellen.

## Claims

1. Refrigeration unit (1), preferably refrigerated display case (1), particularly preferably refrigerated display case (1) provided with doors,
having a refrigeration chamber (11) for receiving items (5) to be cooled and/or to be frozen, preferably food items (5), and
having at least one temperature sensor (2) which is arranged in the refrigeration unit (1) in such a manner than an air temperature of return air (B) of the refrigeration chamber (11) can be detected,
wherein the temperature sensor (2) is arranged in a region of the refrigeration unit (1), preferably a base (11) of the refrigeration unit (1), in which an average temperature of the return air (B) can be detected,
**characterized by**
a sensor holder (3)
with a supporting surface (30), which is arranged on a base (10a) of the refrigeration unit (1),
with at least a first sensor receptacle (33a), which holds the temperature sensor (2),
with at least a first spacer element (32a), which arranges the first sensor receptacle (33a) in relation to the supporting surface (30) at a first height (H1) in height (Z),
with at least a second sensor receptacle (33b), which is designed to hold the temperature sensor (2) as an alternative to the first sensor receptacle (33a), and
with at least a second spacer element (32b), which arranges the second sensor receptacle (33b) in relation to the supporting surface (30) at a second height (H2) in the height (Z),
wherein the first height (H1) and the second height (H2) differ.

2. Refrigeration unit (1) according to Claim 1, **characterized in that**
the temperature sensor (2) is spaced apart in the height (Z) in relation to a base (11) of the refrigeration unit (1) in such a manner that a representative, preferably average, temperature of the return air (B) can be detected.

3. Refrigeration unit (1) according to Claim 1 or 2, **characterized in that**
the temperature sensor (2) is spaced apart in depth (X) in relation to a lower front edge (10e) of the refrigeration unit (1) in such a manner that a representative, preferably average, temperature of the return air (B) can be detected.

4. Refrigeration unit (1) according to one of the preceding claims, **characterized in that**
the refrigeration unit (1) has a base (10a), and **in that**
the refrigeration chamber (11) has a base (11a) which is arranged above the base (10a) of the refrigeration unit (1),
wherein an interspace (12a) is formed between the base (10a) of the refrigeration unit (1) and the base (11a) of the refrigeration chamber (11),
wherein the temperature sensor (2) is arranged within the interspace (12a) between the base (10a) of the refrigeration unit (1) and the base (11a) of the refrigeration chamber (11).

5. Refrigeration unit (1) according to Claim 4, **characterized in that**
the temperature sensor (2) is arranged within the interspace (12a) between the base (10a) of the refrigeration unit (1) and the base (11a) of the refrigeration chamber (11) in height (Z) within the upper half, preferably at approximately three quarters of the height of the interspace (12a).

6. Refrigeration unit (1) according to Claim 4 or 5, **characterized in that**
the temperature sensor (2) is spaced apart within the interspace (12a) between the base (10a) of the refrigeration unit (1) and the base (11a) of the refrigeration chamber (11) in depth (X) from an edge (llaa) of the base (11a) of the refrigeration chamber (11) in such a manner that a representative, preferably average, temperature of the return air (B) can be detected.

7. Refrigeration unit (1) according to one of Claims 4 to 6, **characterized in that**
a cooling unit (13) is arranged within the interspace (12a) between the base (10a) of the refrigeration unit (1) and the base (11a) of the refrigeration chamber (11),
wherein the temperature sensor (2) is arranged in depth (X) between an edge (llaa) of the base (11a) of the refrigeration chamber (11) and the cooling unit (13) in the central half, preferably in the central quarter, particularly preferably approximately centrally.

8. Refrigeration unit (1) according to one of the preceding claims, **characterized in that**
the refrigeration unit (1) has at least one door (15), and **in that**
the temperature sensor (2) is arranged in width (Y) in the central half of the door (15), preferably in the central quarter of the door (15), particularly preferably approximately centrally with respect to the door (15).

9. Refrigeration unit (1) according to one of the preceding claims, **characterized in that**
the first sensor receptacle (33a) and/or the second sensor receptacle (33b) has at least one latching mark (34), preferably a plurality of latching marks (34), which is designed to engage in at least one corresponding constriction (21) of the temperature sensor (2), preferably of a measuring tip (20) of the temperature sensor (2).

10. Refrigeration unit (1) according to one of the preceding claims, **characterized by**
at least one cable-guiding channel (31), which is designed to receive a corresponding cable (22) of the temperature sensor (2),
wherein the cable-guiding channel (31) is preferably of such narrow design that the cable (22) of the temperature sensor (2) can be held non-positively, and/or
wherein the cable-guiding channel (31) is preferably designed in a manner tapering at the edges such that the cable (22) of the temperature sensor (2) can be held non-positively and/or positively.

11. Refrigeration unit (1) according to one of the preceding claims, **characterized by**
at least one holding means (35), which is designed to hold the temperature sensor (2) received in the sensor receptacle (33a; 33b),
wherein the holding means (35) is preferably designed as an endlessly closed band (35a), particularly preferably as a rubber band (35a), as a closed hose clip (35a) or as a closed cable tie (35a), and/or
wherein the holding means (35) is preferably designed as a closure element (35b), particularly preferably as a closable cover (35), which is preferably designed to be latchable.

12. Refrigeration unit (1) according to one of the preceding claims, **characterized in that**
the side of the supporting surface (30) facing away from the first sensor receptacle (33a) has an adhesive layer (36) at least in sections, preferably an adhesive film (36), which is designed to hold the supporting surface (30) on the base (10a) of the refrigeration unit (1) in an integrally bonded manner, and/or
the supporting surface (30) has at least one through-hole (37), which is designed to receive a fastening element (41), preferably a screw (41), such that the supporting surface (30) can be held on the base (10a) of the refrigeration unit (1) positively and/or non-positively by the fastening element (41).

13. Refrigeration unit (1) according to one of the preceding claims, **characterized in that**
the sensor holder (3), preferably the supporting surface (30), has at least one identification element (38) which is designed to unambiguously identify the refrigeration unit (1) via the sensor holder (3), and/or
the sensor holder (3), preferably the supporting surface (30), has at least one information element (39), preferably an inscription (39), which is designed to provide at least one item of information in a visually detectable manner via the sensor holder (3).

## Revendications

1. Meuble réfrigéré (1), de préférence vitrine réfrigérée (1), de plus grande préférence vitrine réfrigérée (1) équipée de portes, comprenant
un espace réfrigéré (11) destiné à recevoir des produits (5), de préférence des produits alimentaires (5), à refroidir et/ou à congeler, et
au moins un capteur de température (2) qui est disposé dans le meuble réfrigéré (1) de telle sorte qu'une température de l'air d'un air de retour (B) de l'espace réfrigéré (11) peut être détectée,
le capteur de température (2) étant disposé dans une zone du meuble réfrigéré (1), de préférence d'un fond (11) du meuble réfrigéré (1), dans laquelle une température moyenne de l'air de retour (B) peut être détectée,
**caractérisé par** un support de capteur (3), comprenant
une surface d'appui (30) qui est disposée sur un fond (10a) du meuble réfrigéré (1),
au moins un premier logement de capteur (33a) qui maintient le capteur de température (2),
au moins un premier écarteur (32a) qui dispose le premier logement de capteur (33a) par rapport à la surface d'appui (30) en hauteur (Z) à une première hauteur (H1),
au moins un deuxième logement de capteur (33b) qui est réalisé pour maintenir le capteur de température (2) en variante par rapport au premier logement de capteur (33a), et
au moins un deuxième écarteur (32b) qui dispose le deuxième logement de capteur (33b) par rapport à la surface d'appui (30) en hauteur (Z) à une deuxième hauteur (H2),
la première hauteur (H1) et la deuxième hauteur (H2) étant différentes.

2. Meuble réfrigéré (1) selon la revendication 1, **caractérisé en ce que** le capteur de température (2) est disposé à distance en hauteur (Z) par rapport à un fond (11) du meuble réfrigéré (1) de telle sorte qu'une température représentative, de préférence moyenne, de l'air de retour (B) peut être détectée.

3. Meuble réfrigéré (1) selon la revendication 1 ou 2, **caractérisé en ce que** le capteur de température (2) est disposé à distance en profondeur (X) par rapport à une arête avant inférieure (10e) du meuble réfrigéré (1) de telle sorte qu'une température représentative, de préférence moyenne, de l'air de retour (B) peut être détectée.

4. Meuble réfrigéré (1) selon l'une quelconque des revendications précédentes, **caractérisé en ce que**
le meuble réfrigéré (1) présente un fond (10a), et **en ce que**
l'espace réfrigéré (11) présente un fond (11a) qui est disposé au-dessus du fond (10a) du meuble réfrigéré (1),
l'espace intermédiaire (12a) étant formé entre le fond (10a) du meuble réfrigéré (1) et le fond (11a) de l'espace réfrigéré (11),
le capteur de température (2) étant disposé à l'intérieur de l'espace intermédiaire (12a) entre le fond (10a) du meuble réfrigéré (1) et le fond (11a) de l'espace réfrigéré (11).

5. Meuble réfrigéré (1) selon la revendication 4, **caractérisé en ce que** le capteur de température (2) est disposé à l'intérieur de l'espace intermédiaire (12a) entre le fond (10a) du meuble réfrigéré (1) et le fond (11a) de l'espace réfrigéré (11) en hauteur (Z) à l'intérieur de la moitié supérieure, de préférence à environ trois quarts de la hauteur de l'espace intermédiaire (12a).

6. Meuble réfrigéré (1) selon la revendication 4 ou 5, **caractérisé en ce que** le capteur de température (2) est disposé à l'intérieur de l'espace intermédiaire (12a) entre le fond (10a) du meuble réfrigéré (1) et le fond (11a) de l'espace réfrigéré (11) à distance en profondeur (X) d'une arête (llaa) du fond (11a) de l'espace réfrigéré (11) de telle sorte qu'une température représentative, de préférence moyenne, de l'air de retour (B) peut être détectée.

7. Meuble réfrigéré (1) selon l'une quelconque des revendications 4 à 6, **caractérisé en ce que**
une unité de refroidissement (13) est disposée à l'intérieur de l'espace intermédiaire (12a) entre le fond (10a) du meuble réfrigéré (1) et le fond (11a) de l'espace réfrigéré (11),
le capteur de température (2) étant disposé en profondeur (X) entre une arête (llaa) du fond (11a) de l'espace réfrigéré (11) et l'unité de refroidissement (13) dans la moitié centrale, de préférence le quart central, de plus grande préférence environ au centre.

8. Meuble réfrigéré (1) selon l'une quelconque des revendications précédentes, **caractérisé en ce que**
le meuble réfrigéré (1) présente au moins une porte (15), et **en ce que**
le capteur de température (2) est disposé en largeur (Y) dans la moitié centrale de la porte (15), de préférence dans le quart central de la porte (15), de plus grande préférence environ au centre par rapport à la porte (15).

9. Meuble réfrigéré (1) selon l'une quelconque des revendications précédentes, **caractérisé en ce que** le premier logement de capteur (33a) et/ou le deuxième logement de capteur (33b) présentent au moins un cran d'arrêt (34), de préférence une pluralité de crans d'arrêt (34), qui sont réalisés pour venir en prise avec au moins un étranglement correspondant (21) du capteur de température (2), de préférence d'une pointe de mesure (20) du capteur de température (2).

10. Meuble réfrigéré (1) selon l'une quelconque des revendications précédentes, **caractérisé par**
au moins une goulotte de guidage de câble (31) qui est réalisée pour recevoir un câble correspondant (22) du capteur de température (2),
la goulotte de guidage de câble (31) étant de préférence réalisée de manière si étroite que le câble (22) du capteur de température (2) peut être maintenu par adhérence, et/ou
la goulotte de guidage de câble (31) étant de préférence réalisée en s'amincissant côté bord de telle sorte que le câble (22) du capteur de température (2) peut être maintenu par adhérence et/ou par complémentarité de forme.

11. Meuble réfrigéré (1) selon l'une quelconque des revendications précédentes, **caractérisé par**
au moins un moyen de maintien (35) qui est réalisé pour maintenir le capteur de température (2) reçu dans le logement de capteur (33a ; 33b),
le moyen de maintien (35) étant de préférence réalisé sous forme de ruban continu fermé (35a), de plus grande préférence sous forme de ruban élastique (35a), de collier de serrage fermé (35a) ou de serre-câble fermé (35a), et/ou
le moyen de maintien (35) étant de préférence réalisé sous forme d'élément de fermeture (35b), de plus grande préférence sous la forme d'un couvercle pouvant être fermé (35b) qui est de préférence réalisé de manière à pouvoir s'enclencher.

12. Meuble réfrigéré (1) selon l'une quelconque des revendications précédentes, **caractérisé en ce que**
la surface d'appui (30) présente sur sa première face détournée du premier logement de capteur (33a) au moins par endroits une couche adhésive (36), de préférence un film adhésif (36), qui est réalisée pour maintenir la surface d'appui (30) par liaison de matière sur le fond (10a) du meuble réfrigéré (1), et/ou
la surface d'appui (30) présente au moins un perçage traversant (37) qui est réalisé pour recevoir un élément de fixation (41), de préférence une vis (41), de sorte que la surface d'appui (30) peut être maintenue par l'élément de fixation (41) par complémentarité de forme et/ou par adhérence sur le fond (10a) du meuble réfrigéré (1).

13. Meuble réfrigéré (1) selon l'une quelconque des revendications précédentes, **caractérisé en ce que**
le support de capteur (3), de préférence la surface d'appui (30), présente au moins un élément d'identification (38) qui est réalisé pour identifier de façon unique le meuble réfrigéré (1) par l'intermédiaire du support de capteur (3), et/ou
le support de capteur (3), de préférence la surface d'appui (30), présente au moins un élément d'information (39), de préférence une inscription (39), qui est réalisé pour fournir une information concernant le support de capteur (3) pouvant être détectée de manière optique.
